# EUROPEAN PATENT APPLICATION

(11) **EP 4 597 685 A1**
(43) Date of publication of application: **06.08.2025**
(21) Application number: 23927086.1
(22) Date of filing: 13.10.2023
(51) Int. Cl.: H01M 10/44, H01M 10/615, H01M 10/65

(54) **BATTERY, CHARGING DEVICE, CHARGING METHOD, BATTERY MANAGEMENT SYSTEM AND ELECTRIC APPARATUS**

(30) Priority: 14.03.2023 WO PCT/CN2023/081452
(71) Applicant: Contemporary Amperex Technology (Hong Kong) Limited, Central (HK)
(72) Inventor: JI, Cheng, Ningde, Fujian 352100 (CN); LI, Baiqing, Ningde, Fujian 352100 (CN)
(74) Representative: Behr, Wolfgang
(86) International application number: PCT/CN2023/124545
(87) International publication number: WO 2024/187742

(57) **Abstract**

Provided are a battery, a charging device, a battery charging method, a battery management system and an electrical apparatus, which can improve the charging performance of batteries. The battery comprises: at least one battery cell, a positive electrode active material of the battery cell comprising LiMPO₄, and M comprising Mn element and Fe element; and the battery management system, used for controlling the temperature of the battery in response to a charging instruction, such that the temperature of the battery during at least part of a charging process is within a preset temperature range.

## Description

The present application claims priority to PCT Application No. PCT/CN2023/081452, filed with China National Intellectual Property Administration on March 14, 2023 and entitled "CHARGING METHOD, APPARATUS, BATTERY PACK, ELECTRONIC DEVICE AND COMPUTER-READABLE STORAGE MEDIUM", which is herein incorporated by reference in its entirety.

### TECHNICAL FIELD

The present application relates to the field of battery technologies, and in particular, to a battery, a charging apparatus, a charging method for a battery, a battery management system (BMS), and an electric device.

### BACKGROUND

With the development of the times, electric vehicles boast great market potential due to their high environmental friendliness, low noise, low operating costs, and other advantages. They can effectively promote energy conservation and emission reduction, contributing to the development and progress of society.

For electric vehicles, battery technology is a crucial factor in their development. Therefore, how to improve the charging performance of the battery has become an urgent problem to be solved.

### SUMMARY

Embodiments of the present application provide a battery, a charging apparatus, a charging method for a battery, a BMS, and an electric device, which can improve the charging performance of the battery.

In a first aspect, a battery is provided. The battery includes: at least one battery cell, a positive electrode active material of the battery cell including LiMPO₄, where M includes Mn element and Fe element; and a BMS, configured to control a temperature of the battery in response to a charging instruction, so that the temperature of the battery remains within a preset temperature range during at least part of stages of a charging process.

The battery in the embodiments of the present application uses a LiMPO₄ material as the positive electrode active material thereof, where M includes Mn element and Fe element, and has advantages such as high energy density and large capacity. However, when the LiMPO₄ material is used as the positive electrode active material of the battery, the delithiation depth of the positive electrode active material is low, which limits the capacity of the battery from being fully utilized. Additionally, the slow delithiation rate of the positive electrode active material results in a low charging rate of the battery, thereby affecting the charging performance of the battery. To this end, the BMS controls the temperature of the battery in response to the charging instruction, so that the temperature of the battery remains within the preset temperature range during at least part of the stages of the charging process, which increases the delithiation depth of the positive electrode active material LiMPO₄, thereby increasing the charging capacity of the battery and improving the charging performance of the battery.

In a possible implementation, the BMS is specifically configured to acquire a state parameter of the battery; and control the temperature of the battery according to the state parameter.

In this implementation, by detecting the state parameter of the battery, a specific strategy for temperature control of the battery is determined, so that the temperature of the battery can be effectively regulated, and the impact on the charging process of the battery can be reduced, thereby reducing unnecessary power consumption.

For example, the state parameter includes the temperature of the battery.

The BMS is specifically configured to send, in a case that the temperature of the battery is less than or equal to a first temperature threshold, a heating instruction to a heating apparatus, the heating instruction being defined to instruct the heating apparatus to heat the battery.

Further, the BMS is further configured to send, in a case that the battery is heated to a temperature greater than or equal to a second temperature threshold, a stop-heating instruction to the heating apparatus, the second temperature threshold being greater than or equal to the first temperature threshold, and the stop-heating instruction being defined to instruct the heating apparatus to stop heating the battery.

For another example, the state parameter further includes a state of charge (SOC) of the battery.

The BMS is specifically configured to send, in a case that the temperature of the battery is less than or equal to the first temperature threshold, and the SOC of the battery is greater than or equal to a first SOC threshold, the heating instruction to the heating apparatus.

Further, the BMS is further configured to send, in a case that the battery is heated to a temperature greater than or equal to the second temperature threshold, and/or the SOC of the battery is less than or equal to a second SOC threshold, the stop-heating instruction to the heating apparatus.

For the battery using the LiMPO₄ material as the positive electrode active material, since the directive current resistance (DCR) of the battery in the charging plateau corresponding to the Mn element is 1.5 to 2 times that in the charging plateau corresponding to the Fe element, lithium ions become difficult to deintercalate from the battery mainly after reaching the charging plateau corresponding to the Mn element. In this implementation, in a case that the SOC of the battery is greater than or equal to the first SOC threshold, the battery has already passed through the charging plateau corresponding to the Fe element and entered the charging plateau corresponding to the Mn element. At this time, controlling the temperature of the battery can significantly improve the delithiation depth of the charging plateau corresponding to the Mn element, thereby increasing the charging capacity of the battery. Moreover, this approach has less impact on the charging process of the battery, reducing unnecessary power consumption.

In a possible implementation, the first SOC threshold and/or the second SOC threshold is determined based on a molar ratio of the iron element in an iron-manganese element of the positive electrode active material. For example, the first SOC threshold and/or the second SOC threshold is a product of the SOC of the battery in a fully charged state and the molar ratio.

In this implementation, the first SOC threshold and/or the second SOC threshold can be determined based on the molar ratio of the iron element in the iron-manganese element of the positive electrode active material, such that the temperature of the battery is controlled when the battery reaches the charging plateau corresponding to the Mn element, thereby effectively improving the charging performance of the battery and reducing unnecessary power consumption.

In the embodiments of the present application, the BMS may specifically send the heating instruction to the heating apparatus before or during the charging process of the battery to instruct the heating apparatus to heat the battery, thereby minimizing the impact of the heating process on the charging process. For example, before the charging process, the heating instruction is sent to the heating apparatus, and in a case that the heating apparatus heats the battery to a temperature within the temperature range, the battery is controlled to enter the charging process; for another example, during the charging process, the heating instruction is sent to the heating apparatus, the heating apparatus being configured to heat the battery in parallel during the charging process; for another example, during the charging process, the heating instruction is sent to the heating apparatus, and a duration for which the charging process is paused for heating is controlled, the heating apparatus being configured to heat the battery within the duration.

In a possible implementation, the heating apparatus is electrically connected to the battery, and the heating apparatus is configured to provide a pulse current to the battery in response to the heating instruction, so that the battery generates heat when the pulse current passes through the battery.

In this implementation, the battery may be heated by using a pulse heating method; the heating apparatus is electrically connected to the battery, and the heating apparatus provides the pulse current to the battery in response to the heating instruction of the BMS. When the pulse current passes through the battery, the battery can generate heat due to its own internal resistance, thereby achieving self-heating of the battery. The heating method requires no additional hardware heating structures, which helps reduce the structural complexity of the battery.

For example, the heating apparatus includes a charging apparatus for charging the battery, where the charging apparatus is configured to charge the battery based on the pulse current in response to the heating instruction.

For another example, the heating apparatus includes a motor in an electric device containing the battery, the motor includes a winding and a control circuit connected between the winding and the battery, and the BMS is specifically configured to send the heating instruction to a vehicle control unit (VCU) in the electric device, the VCU being configured to control the control circuit in response to the heating instruction, so that the motor charges the battery based on the pulse current. In this way, the heat generated by the working loss of the motor in the electric device can be used to heat the battery without consuming additional electric energy.

For another example, the heating apparatus includes a heating circuit, the heating circuit includes an energy storage element and a switch module, and the switch module is configured to form a circuit where the energy storage element charges the battery and a circuit where the battery discharges to the energy storage element in response to the heating instruction, so that the energy storage element charges the battery based on the pulse current. The battery is heated by using an additional heating circuit. In a case that the electric device, such as a vehicle, is not connected to the charging apparatus, or the motor of the electric device is in operation, the vehicle can be preheated, thereby greatly saving the user's time.

In a possible implementation, the battery includes the heating apparatus, the heating apparatus is arranged outside a housing of the battery, and the heating apparatus is configured to generate heat in response to the heating instruction to heat the battery through heat transfer between the heating apparatus and the battery.

In this implementation, the battery may also be heated by using an external heating method. The heating apparatus is arranged outside the housing of the battery. The heating apparatus generates heat in response to the heating instruction of the BMS and heats the battery through the heat transfer between the heating apparatus and the battery. This heating method may be performed during the charging process of the battery, that is, the battery may be heated simultaneously during the charging process of the battery, without affecting the charging process of the battery.

For example, the heating apparatus includes a heating film, the heating film includes a conductive layer and an insulating layer located between the conductive layer and the housing, the conductive layer is configured to generate heat during passage of a current and transfer the heat to the battery, and the insulating layer is configured to electrically isolate the conductive layer from the battery.

For another example, the heating apparatus includes a heat-generating component and a heat-conducting component, the heat-conducting component accommodates a heat-conducting medium, the heat-generating component is configured to generate heat during passage of a current, and the heat-conducting medium in the heat-conducting component is configured to transfer the heat generated by the heat-generating component to the battery.

For another example, the heating apparatus includes a hydrothermal pipeline arranged around the battery, the hydrothermal pipeline is connected to a heat pump, and the heat pump is configured to control circulating inflow and outflow of a liquid in the hydrothermal pipeline, thereby heating the battery through the liquid in the process.

In a possible implementation, the BMS is further configured to determine a heating method for heating the battery according to the temperature of the battery, and send the heating instruction to a corresponding heating apparatus according to the heating method.

In this implementation, since different heating methods correspond to different temperature ranges where heating efficiency is optimal, an appropriate heating method can be selected according to the temperature of the battery to improve heating efficiency.

For example, the BMS is specifically configured to determine, in a case that the temperature of the battery is less than a third temperature threshold, the heating method to be a first heating method, the first heating method being a method for heating the battery based on the pulse current, and determine, in a case that the temperature of the battery is greater than the third temperature threshold, the heating method to be a second heating method, the second heating method being a method for heating the battery through heat transfer.

Since the heating rate of the pulse heating method is about 2 °C/min, when the temperature rises to 0 °C to 10 °C, the internal resistance of the battery changes, which will cause the heating rate to decrease. At this time, the battery may be heated by using the external heating method.

In a possible implementation, the BMS is further configured to send a charging parameter to the charging apparatus, where the charging parameter includes information of a constant current and a constant voltage, so that the charging apparatus charges the battery based on the constant current, and charges, in a case that the battery is charged to a voltage greater than or equal to a voltage threshold based on the constant current, the battery based on the constant voltage until the battery reaches a fully charged state.

In this implementation, the battery may be charged by using a charging method of first constant current and then constant voltage, which not only increases the charging rate but also further increases the charging capacity of the battery.

In a possible implementation, the temperature range includes at least one of the following ranges: 30 °C to 50 °C, 30 °C to 40 °C, 40 °C to 50 °C, and 40 °C to 45 °C.

If the temperature of the battery is too low, the charging capacity of the battery cannot be effectively improved, and if the temperature of the battery is too high, it may cause other damage to the battery. Therefore, in this implementation, the temperature of the battery is controlled within a predetermined temperature range, allowing the charging capacity to be increased without causing additional damage to the battery.

In a possible implementation, the positive electrode active material includes at least one of the following materials: LiMn_{1-y}Fe_{y}PO₄, where y is any value in a range of 0.001 to 0.5; Li₁₊ₜMn_{1-c}Fe_{c}P_{1-z}R_{z}O₄, where t is any value in a range of -0.100 to 0.100, c is any value in a range of 0.001 to 0.500, z is any value in a range of 0.001 to 0.100, and R includes one or more elements selected from B, S, Si, and N; and Li_{1+w}CₘMn₁₋ᵤFeᵤP₁₋ₐRₐO₄₋ₙDₙ, where C includes one or more elements selected from Zn, Al, Na, K, Mg, Nb, Mo, and W, R includes one or more elements selected from B, S, Si, and N, D includes one or more elements selected from S, F, Cl, and Br, w is any value in a range of -0.100 to 0.100, u is any value in a range of 0.001 to 0.500, a is any value in a range of 0.001 to 0.100, n is any value in a range of 0.001 to 0.1, and m is any value in a range of 0.9 to 1.1.

In a second aspect, a charging apparatus is provided. The charging apparatus includes a charging module, configured to charge a battery; and a control module, configured to control a temperature of the battery in response to a charging instruction, so that the temperature of the battery remains within a preset temperature range during at least part of stages of a charging process.

In the embodiments of the present application, the charging apparatus may also be configured with a temperature control function for the battery, to control the temperature of the battery to remain within the preset temperature range during at least part of the stages of the charging process, thereby reducing the complexity of the BMS.

For example, the control module is specifically configured to acquire information of a positive electrode active material of the battery, and control the temperature of the battery in a case that the positive electrode active material includes LiMPO₄, where M includes Mn element and Fe element.

The battery uses a LiMPO₄ material as the positive electrode active material, where M includes Mn element and Fe element, and has advantages such as high energy density and large capacity. However, when the LiMPO₄ material is used as the positive electrode active material of the battery, the delithiation depth of the positive electrode active material is low, which limits the capacity of the battery from being fully utilized. Additionally, the slow delithiation rate of the positive electrode active material results in a low charging rate of the battery, thereby affecting the charging performance of the battery. To this end, in a case that the charging apparatus acquires the information of the positive electrode active material of the battery and determines that the battery connected thereto is a battery using the LiMPO₄ material as the positive electrode active material, the temperature of the battery is controlled, so that the temperature of the battery remains within the preset temperature range during at least part of the stages of the charging process. This helps increase the delithiation depth of the positive electrode active material LiMPO₄, thereby increasing the charging capacity and improving the charging performance of the battery.

In a possible implementation, the control module is specifically configured to receive a state parameter of the battery sent by a BMS of the battery; and control the temperature of the battery according to the state parameter.

In this implementation, by acquiring the current state parameter of the battery, a specific strategy for temperature control of the battery is determined, so that the temperature of the battery can be effectively regulated, and the impact on the charging process of the battery can be reduced, thereby reducing unnecessary power consumption.

For example, the state parameter includes the temperature of the battery.

The control module is specifically configured to send, in a case that the temperature of the battery is less than or equal to a first temperature threshold, a heating instruction to the BMS, the heating instruction being defined to instruct the BMS to control a heating apparatus to heat the battery.

Further, the control module is further configured to send, in a case that the battery is heated to a temperature greater than or equal to a second temperature threshold, a stop-heating instruction to the BMS, the second temperature threshold being greater than or equal to the first temperature threshold, and the stop-heating instruction being defined to instruct the BMS to control the heating apparatus to stop heating the battery.

For another example, the state parameter further includes a SOC of the battery.

The control module is specifically configured to send, in a case that the temperature of the battery is less than or equal to the first temperature threshold, and the SOC of the battery is greater than or equal to a first SOC threshold, the heating instruction to the BMS.

Further, the control module is specifically configured to send, in a case that the battery is heated to a temperature greater than or equal to the second temperature threshold, and/or the SOC of the battery is less than or equal to a second SOC threshold, the stop-heating instruction to the BMS.

For the battery using the LiMPO₄ material as the positive electrode active material, since the DCR of the battery in the charging plateau corresponding to the Mn element is 1.5 to 2 times that in the charging plateau corresponding to the Fe element, lithium ions become difficult to deintercalate from the battery mainly after reaching the charging plateau corresponding to the Mn element. In this implementation, in a case that the SOC of the battery is greater than or equal to the first SOC threshold, the battery has already passed through the charging plateau corresponding to the Fe element and entered the charging plateau corresponding to the Mn element. At this time, controlling the temperature of the battery can significantly improve the delithiation depth of the charging plateau corresponding to the Mn element, thereby increasing the charging capacity of the battery. Moreover, this approach has less impact on the charging process of the battery, reducing unnecessary power consumption.

In a possible implementation, the first SOC threshold and/or the second SOC threshold is determined based on a molar ratio of the iron element in an iron-manganese element of the positive electrode active material. For example, the first SOC threshold and/or the second SOC threshold is a product of the SOC of the battery in a fully charged state and the molar ratio.

In this implementation, the first SOC threshold and/or the second SOC threshold can be determined based on the molar ratio of the iron element in the iron-manganese element of the positive electrode active material, such that the temperature of the battery is controlled when the battery reaches the charging plateau corresponding to the Mn element, thereby effectively improving the charging performance of the battery and reducing unnecessary power consumption.

In the embodiments of the present application, the charging apparatus may specifically send the heating instruction to the BMS before charging the battery or during the charging process of the battery to heat the battery, thereby minimizing the impact of the heating process on the charging process. For example, before the charging process, the heating instruction is sent to the BMS, and in a case that the heating apparatus heats the battery to a temperature within the temperature range, the battery is controlled to enter the charging process; for another example, during the charging process, the heating instruction is sent to the BMS, the heating apparatus being configured to heat the battery in parallel during the charging process; for another example, during the charging process, the heating instruction is sent to the BMS, and a duration for which the charging process is paused for heating is controlled, the heating apparatus being configured to heat the battery within the duration.

In a possible implementation, the heating apparatus is electrically connected to the battery, and the BMS is configured to control the heating apparatus to provide a pulse current to the battery in response to the heating instruction, so that the battery generates heat when the pulse current passes through the battery.

In this implementation, the battery may be heated by using a pulse heating method; the heating apparatus is electrically connected to the battery, and the heating apparatus provides the pulse current to the battery. When the pulse current passes through the battery, the battery can generate heat due to its own internal resistance, thereby achieving self-heating of the battery. The heating method requires no additional hardware heating structures, which helps reduce the structural complexity of the battery.

In a possible implementation, the battery includes the heating apparatus, the heating apparatus is arranged outside the housing of the battery, and the battery management module is configured to control the heating apparatus to generate heat in response to the heating instruction to heat the battery through heat transfer between the heating apparatus and the battery.

In this implementation, the battery may also be heated by using an external heating method. The heating apparatus is arranged outside the housing of the battery. The heating apparatus can generate heat and heat the battery through the heat transfer between the heating apparatus and the battery. This heating method may be performed during the charging process of the battery, that is, the battery may be heated simultaneously during the charging process of the battery, without affecting the charging process of the battery.

In a possible implementation, the control module is further configured to determine a heating method for heating the battery according to the temperature of the battery, and send, according to the heating method, the heating instruction to the BMS of the battery, the heating instruction being defined to control a corresponding heating apparatus to heat the battery.

In this implementation, since different heating methods correspond to different temperature ranges where heating efficiency is optimal, an appropriate heating method can be selected according to the temperature of the battery to improve heating efficiency.

For example, the control module is specifically configured to determine, in a case that the temperature of the battery is less than a third temperature threshold, the heating method to be a first heating method, the first heating method being a method for heating the battery based on the pulse current, and determine, in a case that the temperature of the battery is greater than the third temperature threshold, the heating method to be a second heating method, the second heating method being a method for heating the battery through heat transfer.

Since the heating rate of the pulse heating method is about 2 °C/min, when the temperature rises to 0 °C to 10 °C, the internal resistance of the battery changes, which will cause the heating rate to decrease. At this time, the battery may be heated by using the external heating method.

In a possible implementation, the charging module is further configured to receive a charging parameter sent by the BMS of the battery, the charging parameters including information of a constant current and a constant voltage, charge the battery based on the constant current, and charge, in a case that the battery is charged to a voltage greater than or equal to a voltage threshold based on the constant current, the battery based on the constant voltage until the battery reaches a fully charged state.

In this implementation, the charging apparatus may charge the battery by using a charging method of first constant current and then constant voltage, which not only increases the charging rate but also further increases the charging capacity of the battery.

In a possible implementation, the temperature range includes at least one of the following ranges: 30 °C to 60 °C, 30 °C to 55 °C, 30 °C to 50 °C, 30 °C to 45 °C, 30 °C to 40 °C, 40 °C to 50 °C, and 40 °C to 45 °C.

If the temperature of the battery is too low, the charging capacity of the battery cannot be effectively improved, and if the temperature of the battery is too high, it may cause other damage to the battery. Therefore, in this implementation, the temperature of the battery is controlled within a predetermined temperature range, allowing the charging capacity to be increased without causing additional damage to the battery.

In a third aspect, a charging method for a battery is provided, a positive electrode active material of the battery including LiMPO₄, where M includes Mn element and Fe element. The charging method includes controlling a temperature of the battery in response to a charging instruction, so that the temperature of the battery remains within a preset temperature range during at least part of stages of a charging process.

In a possible implementation, controlling the temperature of the battery includes: acquiring a state parameter of the battery; and controlling the temperature of the battery according to the state parameter.

In a possible implementation, the state parameter includes the temperature of the battery; controlling the temperature of the battery according to the state parameter includes sending, in a case that the temperature of the battery is less than or equal to a first temperature threshold, a heating instruction to a heating apparatus, the heating instruction being defined to instruct the heating apparatus to heat the battery.

In a possible implementation, the charging method further includes sending, in a case that the battery is heated to a temperature greater than or equal to a second temperature threshold, a stop-heating instruction to the heating apparatus, the second temperature threshold being greater than or equal to the first temperature threshold, and the stop-heating instruction being defined to instruct the heating apparatus to stop heating the battery.

In a possible implementation, the state parameter further includes the SOC of the battery; sending, in the case that the temperature of the battery is less than or equal to the first temperature threshold, the heating instruction to the heating apparatus includes sending, in a case that the temperature of the battery is less than or equal to the first temperature threshold, and the SOC of the battery is greater than or equal to a first SOC threshold, the heating instruction to the heating apparatus.

In a possible implementation, the charging method further includes sending, in a case that the battery is heated to a temperature greater than or equal to the second temperature threshold, and/or the SOC of the battery is less than or equal to a second SOC threshold, the stop-heating instruction to the heating apparatus.

In a possible implementation, the first SOC threshold and/or the second SOC threshold is determined based on a molar ratio of the iron element in an iron-manganese element of the positive electrode active material.

In a possible implementation, the first SOC threshold and/or the second SOC threshold is a product of the SOC of the battery in a fully charged state and the molar ratio.

In a possible implementation, the temperature range includes at least one of the following ranges: 30 °C to 60 °C, 30 °C to 55 °C, 30 °C to 50 °C, 30 °C to 45 °C, 30 °C to 40 °C, 40 °C to 50 °C, and 40 °C to 45 °C.

In a fourth aspect, a charging method for a battery is provided. The charging method includes controlling a temperature of the battery in response to a charging instruction, so that the temperature of the battery remains within a preset temperature range during at least part of stages of a charging process.

In a possible implementation, controlling the temperature of the battery includes: acquiring information of a positive electrode active material of the battery; and controlling the temperature of the battery in a case that the positive electrode active material includes LiMPO₄, where M includes Mn element and Fe element.

In a possible implementation, controlling the temperature of the battery includes: receiving a state parameter of the battery sent by a BMS of the battery; and controlling the temperature of the battery according to the state parameter.

In a possible implementation, the state parameter includes the temperature of the battery; controlling the temperature of the battery according to the state parameter includes sending, in a case that the temperature of the battery is less than or equal to a first temperature threshold, a heating instruction to the BMS, the heating instruction being defined to instruct the BMS to control a heating apparatus to heat the battery.

In a possible implementation, the charging method further includes sending, in a case that the battery is heated to a temperature greater than or equal to a second temperature threshold, a stop-heating instruction to the BMS, the second temperature threshold being greater than or equal to the first temperature threshold, and the stop-heating instruction is configured to instruct the BMS to control the heating apparatus to stop heating the battery.

In a possible implementation, the state parameter further includes the SOC of the battery; sending, in the case that the temperature of the battery is less than or equal to the first temperature threshold, the heating instruction to the heating apparatus includes sending, in a case that the temperature of the battery is less than or equal to the first temperature threshold, and the SOC of the battery is greater than or equal to a first SOC threshold, the heating instruction to the BMS.

In a possible implementation, the charging method further includes sending, in a case that the battery is heated to a temperature greater than or equal to the second temperature threshold, and/or the SOC of the battery is less than or equal to a second SOC threshold, the stop-heating instruction to the BMS.

In a possible implementation, the first SOC threshold and/or the second SOC threshold is determined based on a molar ratio of the iron element in an iron-manganese element of the positive electrode active material.

In a possible implementation, the first SOC threshold and/or the second SOC threshold is a product of the SOC of the battery in a fully charged state and the molar ratio.

In a possible implementation, the temperature range includes at least one of the following ranges: 30 °C to 60 °C, 30 °C to 55 °C, 30 °C to 50 °C, 30 °C to 45 °C, 30 °C to 40 °C, 40 °C to 50 °C, and 40 °C to 45 °C.

In a fifth aspect, a BMS is provided. The BMS is configured to perform the charging method for the battery in the first aspect or any one of the possible implementations of the first aspect, a positive electrode active material of the battery including LiMPO₄, where M includes Mn element and Fe element.

In a sixth aspect, an electric device is provided. The electric device includes the battery in the first aspect or any one of the possible implementations of the first aspect.

In a seventh aspect, a charging device is provided. The charging device includes a processor and a memory, where the memory is configured to store a computer program, and the processor is configured to call and run the computer program stored in the memory to perform the method in the third aspect or any one of the possible implementations of the third aspect.

In an eighth aspect, a charging device is provided. The charging device includes a processor and a memory, where the memory is configured to store a computer program, and the processor is configured to call and run the computer program stored in the memory to perform the method in the fourth aspect or any one of the possible implementations of the fourth aspect.

In a ninth aspect, a computer-readable storage medium for storing a computer program is provided. The computer program, when executed by a computing device, causes the computing device to implement the method in the third aspect or any one of the implementations of the third aspect.

In a tenth aspect, a computer-readable storage medium for storing a computer program is provided. The computer program, when executed by a computing device, causes the computing device to implement the method in the fourth aspect or any one of the implementations of the fourth aspect.

### BRIEF DESCRIPTION OF THE DRAWINGS

To more clearly illustrate the technical solutions in embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts.
FIG. 1 is a schematic block diagram of a charging system that may be used in an embodiment of the present application;
FIG. 2 is a schematic block diagram of a battery according to an embodiment of the present application;
FIG. 3 is a curve diagram of a relationship between charging capacity and temperature of a battery according to an embodiment of the present application;
FIG. 4 is a curve diagram of a relationship between discharging capacity and temperature of a battery according to an embodiment of the present application;
FIG. 5 is a schematic flow chart of a charging method according to an embodiment of the present application;
FIG. 6 is a flow interaction diagram between a battery and a heating apparatus according to an embodiment of the present application;
FIG. 7 is a diagram of a possible heating apparatus according to an embodiment of the present application;
FIG. 8 is a diagram of another possible heating apparatus according to an embodiment of the present application;
FIG. 9 is a schematic block diagram of a charging apparatus according to an embodiment of the present application; and
FIG. 10 is a diagram of an electric device according to an embodiment of the present application.

### DETAILED DESCRIPTION

To make the objectives, technical solutions, and advantages of embodiments of the present application clearer, the technical solutions in the embodiments of the present application will be clearly and completely described below with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those of ordinary skill in the art to which the present application belongs. The terms used in the specification of the present application are only used to describe specific embodiments and are not intended to limit the present application. The terms "include", "comprise", "have", and any variants thereof in the specification and claims of the present application and the descriptions of the above drawings are intended to cover a non-exclusive inclusion. The terms "first", "second", and the like in the specification and claims of the present application and the above drawings are defined to distinguish different objects and are not intended to describe a specific order or priority. The "perpendicular" is not strictly perpendicular but is within the allowable range of error. The "parallel" is not strictly parallel but is within the allowable range of error.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the described embodiments of the present application can be combined with other embodiments.

In the description of the present application, it should be noted that unless otherwise explicitly specified or limited, the terms "mount", "connect", "connection", and "attachment" shall be construed broadly and may be, for example, fixed connection, detachable connection, or integrated connection, or direct connection, indirect connection via an intermediate, or internal communication between two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

A battery generally refers to a single physical module that includes one or more battery cells to provide higher voltage and capacity. For example, the battery may be a battery module, where a plurality of battery cells are arranged and fixed to form a battery module; for another example, the battery may be a battery pack, where the battery includes a battery cell and a case, and the battery cell or the battery module is accommodated in the case.

The technical solutions described in the embodiments of the present application are applicable to various apparatuses that use batteries, such as mobile phones, portable devices, laptops, battery cars, electric toys, electric tools, electric vehicles, ships, and spacecrafts. For example, the spacecraft includes an airplane, a rocket, a space shuttle, and a spaceship.

It is to be understood that the technical solutions described in the embodiments of the present application are not limited to the apparatuses described above, but are applicable to all apparatuses that use batteries. However, for the sake of brevity, the following embodiments are illustrated using electric vehicles as examples.

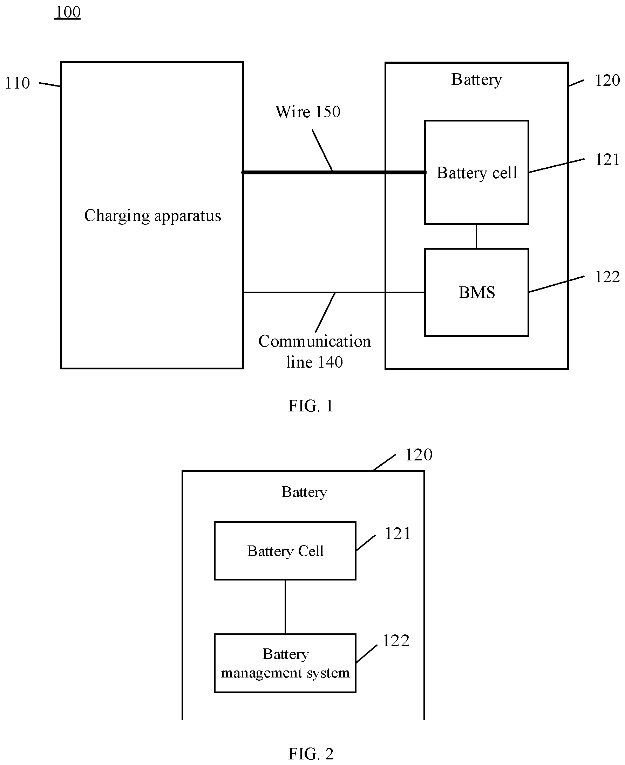

FIG. 1 illustrates an architecture diagram of a charging system 100 applicable to the embodiments of the present application. As shown in FIG. 1, the charging system 100 includes a charging apparatus 110 and a battery 120. Optionally, the battery 120 may be a battery in an electric device such as a vehicle or a battery in other application scenarios.

Optionally, the battery 120 includes a battery cell 121 and a BMS 122. The BMS 122 is configured to monitor the state of the battery cell 121, and perform intelligent management and maintenance on the battery cell 121, thereby reducing the probability of issues such as overcharging and overdischarging of the battery 120. For example, the BMS 122 may be configured to monitor the state of one battery cell 121; or, the BMS 122 may also be configured to monitor the state of a plurality of battery cells 121 or a battery module group composed of a plurality of battery cells 121.

The charging apparatus 110 is configured to supplement electric energy to the battery cell 121 in the battery 120 and/or control the discharge of the battery cell 121. For example, the charging apparatus 110 may be a common charging pile, a super charging pile, a charging pile supporting a vehicle to grid (V2G) mode, a charger, or other charging apparatuses for charging and/or discharging a battery. The embodiments of the present application do not limit the specific type and specific application scenario of the charging apparatus 110.

Optionally, as shown in FIG. 1, the charging apparatus 110 is connected to the battery cell 121 through a wire 150, and is connected to the BMS 122 through a communication line 140, where the communication line 140 is configured to implement information exchange between the charging apparatus 110 and the BMS 122. As an example, the communication line 140 includes, but is not limited to, a control area network (CAN) communication bus or a daisy chain communication bus.

Optionally, the charging apparatus 110 may communicate with the BMS 122 through a wireless network in addition to communicating with the BMS 122 through the communication line 140. The embodiments of the present application do not specifically limit the wired communication type or the wireless communication type between the charging apparatus 110 and the BMS 122.

As shown in FIG. 2, the embodiments of the present application provide a battery 120, including at least one battery cell 121 and a BMS 122. The positive electrode active material of the battery cell 121 is lithium manganese iron phosphate, hereinafter also referred to as LiMPO₄, where M includes Mn element and Fe element. The BMS 122 is configured to control the temperature of the battery 120 in response to a charging instruction, so that the temperature of the battery 120 remains within a preset temperature range during at least part of stages of a charging process. The BMS 122 may be, for example, the BMS 122 shown in FIG. 1, or may be other control modules that can be configured to control the temperature of the battery 120.

Compared to traditional batteries using a LiFePO₄ material as the positive electrode active material, the battery 120 using a LiMPO₄ material as the positive electrode active material has a higher voltage plateau. Its energy density is approximately 15% higher than that of batteries using the LiFePO₄ material, and it has lower costs and higher safety.

Although the battery 120 using the LiMPO₄ material as the positive electrode active material has advantages such as higher energy density and greater capacity, the delithiation depth of the positive electrode active material is relatively low when using the LiMPO₄ material as the positive electrode active material of the battery 120, which limits the capacity of the battery 120 from being fully utilized. Additionally, the slow delithiation rate of the positive electrode active material results in a low charging speed of the battery 120, thereby affecting the charging performance of the battery 120 and degrading the user experience.

To this end, in the embodiments of the present application, the BMS 122 controls the temperature of the battery 120 in response to the charging instruction, so that the temperature of the battery 120 remains within the preset temperature range during at least part of the stages of the charging process, which increases the delithiation depth of the positive electrode active material LiMPO₄, thereby increasing the charging capacity of the battery 120 and improving the charging performance of the battery 120.

By controlling the temperature of the battery 120 using LiMPO₄ as the positive electrode active material to enable the temperature during the charging process to remain within the preset temperature range, the polarization of the LiMPO₄ material can be eliminated, and the delithiation depth of the positive electrode active material LiMPO₄ of the battery 120 is increased, thereby increasing the capacity of the battery 120. At the same time, a higher temperature helps increase the diffusion rate and delithiation rate of lithium ions, thereby shortening the charging time of the battery 120 and making it easy to meet the demand for fast charging. Therefore, by controlling the temperature, the temperature of the battery 120 remains within the preset temperature range during at least part of the stages of the charging process, which can improve the issues of limited capacity utilization and slow charging speed caused by using the LiMPO₄ material as the positive electrode active material of the battery 120.

If the temperature of the battery 120 is too low, the charging capacity of the battery 120 cannot be effectively improved, and if the temperature of the battery 120 is too high, it may cause other damage to the battery 120. Therefore, in some embodiments, the BMS 122 needs to control the temperature of the battery 120 to remain within the preset temperature range during at least part of the stages of the charging process, thereby reducing the damage to the battery 120 while increasing the charging capacity of the battery 120.

The battery 120 may be configured with a temperature range that balances improving the charging capacity with reducing the battery failure rate as the preset temperature range. For example, the preset temperature range may include at least one of the following ranges: 30 °C to 90 °C, 30 °C to 80 °C, 30 °C to 60 °C, 30 °C to 55 °C, 30 °C to 50 °C, 30 °C to 45 °C, 30 °C to 40 °C, 40 °C to 50 °C, and 40 °C to 45 °C.

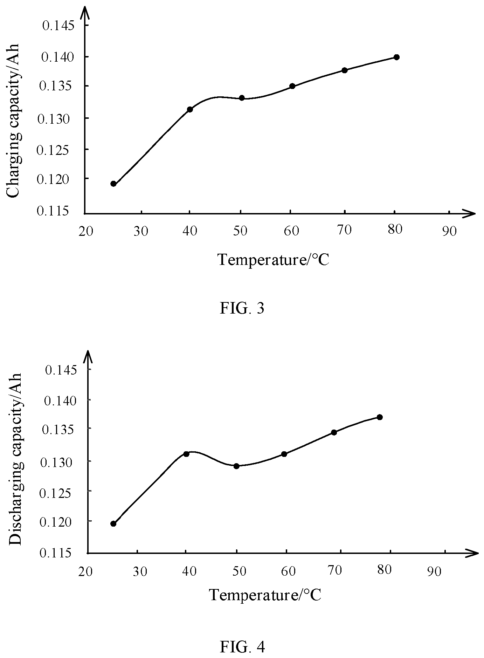

The preset temperature range is described in detail below in conjunction with FIG. 3 and FIG. 4.

By testing the capacity of the battery 120 at different temperatures, FIG. 3 and FIG. 4 are obtained, where FIG. 3 and FIG. 4 illustrate how the charging capacity and discharging capacity of the battery 120 change with temperature, respectively.

The materials, adhesives, and conductive agents of the positive electrode plate of the tested battery 120, along with their corresponding contents, are 97.3% LiMPO₄, 2.2% PVDF, and 0.5% SP, with a compacted density of 2.35 and a thickness of 213 µm. The materials, adhesives, and conductive agents of the negative electrode plate of the battery 120, along with their corresponding contents, are 96.5% graphite, 1.3% SBR, 1.1 CMC%, and 0.4% SP, with a compacted density of 1.65 and a thickness of 142 µm. The electrolyte of the battery 120 is prepared by using corresponding solvents, electrolytes, additives, and lithium salts in the specified proportions. For example, ethylene carbonate, dimethyl carbonate, and 1,2-propylene carbonate are mixed in a volume ratio of 1:1:1, and then LiPF₆ is uniformly dissolved in the resulting solution to obtain the electrolyte. The concentration of LiPF₆ in the electrolyte is 1 mol/L.

As an example, during the test, the battery cell 121 is left to stand in a constant temperature oven at 25 °C for 2 h, discharged to 2.5 V at 0.33 C, and then discharged to 2.0 V at 0.02 C, the battery cell is then left to stand for 2 h, charged to 4.3 V at 0.33 C, and then charged at a constant voltage to a cutoff current of 0.05 C, and the charging capacity at 25 °C can be obtained from the step. After standing for 2 h, the battery cell is discharged to 2.0 V at 0.33 C, and the discharging capacity at 25 °C can be obtained from the step.

The temperature of the constant temperature oven is changed, and the corresponding charging capacity and discharging capacity can be obtained for each temperature. Based on the charging capacity and discharging capacity corresponding to a plurality of temperatures, curves of the test results for the charging capacity and the discharging capacity as shown in FIG. 3 and FIG. 4 are plotted.

As shown in Table 1, at 25 °C, namely, normal temperature, the charging capacity of the battery 120 is 0.119 Ah, and the discharging capacity is 0.119 Ah; at 40 °C, the charging capacity of the battery 120 is 0.131 Ah, and the discharging capacity is 0.132 Ah; at 50 °C, the charging capacity of the battery 120 is 0.132 Ah, and the discharging capacity is 0.130 Ah; at 60 °C, the charging capacity of the battery 120 is 0.134 Ah, and the discharging capacity is 0.133 Ah; at 70 °C, the charging capacity of the battery 120 is 0.137 Ah, and the discharging capacity is 0.136 Ah; at 80 °C, the charging capacity of the battery 120 is 0.139 Ah, and the discharging capacity is 0.139 Ah.

**Table 1**

| Temperature (°C) | Charging capacity (Ah) | Discharging capacity (Ah) |
|---|---|---|
| 25 | 0.119 | 0.119 |
| 40 | 0.131 | 0.132 |
| 50 | 0.132 | 0.130 |
| 60 | 0.134 | 0.133 |
| 70 | 0.137 | 0.136 |
| 80 | 0.139 | 0.139 |

As shown in FIG. 3 and FIG. 4, with the increase in the charging temperature of the battery 120, both the charging capacity and discharging capacity of the battery 120 show an overall increasing trend, with a certain fallback between 45 °C and 50 °C. It can be understood that as the temperature of the battery 120 increases, both the charging capacity and discharging capacity of the battery 120 increase, whereas as the temperature of the battery 120 decreases, the probability of thermal runaway of the battery 120 or other issues is reduced. To increase the charging capacity and reduce the failure rate of the battery 120, the BMS 122 needs to control the temperature of the battery 120 within the preset temperature range. The temperature range is set to 40 °C to 50 °C, particularly 40 °C to 45 °C, which can significantly improve the charging capacity and discharging capacity of the battery 120, meet conventional charging demands, and will not increase the damage caused by the high temperature to the battery 120 or even to the entire vehicle.

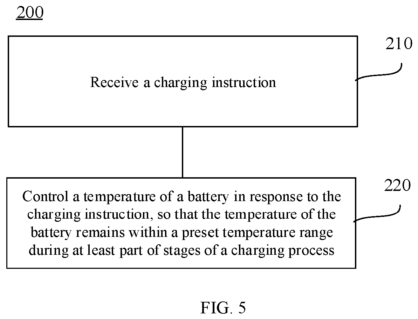

The embodiments of the present application further provide a charging method 200, as shown in FIG. 5, which is a schematic flow chart of the charging method 200. The charging method 200 is configured to charge the battery 120. The battery 120 includes at least one battery cell 121 and a BMS 122. The positive electrode active material of the battery cell 121 is LiMPO₄. The charging method 200 may be performed by the BMS 122. As shown in FIG. 5, the charging method 200 may include part or all of the following steps.

In step 210, a charging instruction is received.

In step 220, a temperature of the battery 120 is controlled in response to the charging instruction, so that the temperature of the battery 120 remains within a preset temperature range during at least part of stages of a charging process.

The charging instruction is defined to instruct the charging of the battery 120. For example, the charging instruction may be a charging demand instruction defined to instruct a demand of the battery 120 for charging, although the battery 120 may not be connected to the charging apparatus 110. For example, the charging demand instruction may be an instruction issued by the control module of an electric device, such as a vehicle. The charging instruction may also be a charging access instruction defined to instruct that the charging apparatus 110 has been connected to the battery 120. For example, the charging access instruction may be an instruction triggered in the process of establishing a connection between the charging apparatus 110 and the battery 120. Additionally, the charging instruction may be a charging in-progress instruction defined to indicate that the battery 120 is being charged. For example, the charging instruction may be information such as a current or voltage indicating that the battery 120 is being charged.

Optionally, before the battery 120 is connected to the charging apparatus 110, the temperature of the battery 120 can be controlled to remain within the preset temperature range and maintained through the charging instruction, so that the temperature of the battery 120 can be maintained within the temperature range during at least part of stages of the process in which the battery is connected to the charging pile 110 for charging; or, before the battery 120 is connected to the charging apparatus 110, the temperature of the battery 120 can be controlled to exceed the preset temperature range through the charging instruction, so that the temperature of the battery 120 can be within the range during at least part of the stages of the process in which the battery is connected to the charging pile 110 for charging.

Before the battery 120 is connected to the charging apparatus 110, optionally, whether to control the temperature of the battery 120, such as heating the battery, may be determined according to the SOC of the battery 120. For example, in the case that the SOC of the battery 120 is relatively low, to save the SOC of the battery, the battery 120 may not be heated. However, in the case that the SOC of the battery is sufficient, the battery 120 is heated, so that the temperature thereof reaches the preset temperature range as soon as possible.

Controlling the temperature of the battery 120 described above includes cooling and/or heating the battery 120. In the case that the temperature of the battery 120 is relatively high, to reduce the damage caused by the high temperature without affecting the charging performance of the battery 120, the BMS 122 may, for example, control corresponding water-cooling, air-cooling, and other structures to cool the battery 120, so that the temperature of the battery 120 remains within the preset temperature range.

In the case that the temperature of the battery 120 is relatively low, to improve the charging performance of the battery, in step 220, the BMS 122 may send a heating instruction to a heating apparatus 130, where the heating instruction is defined to instruct the heating apparatus 130 to heat the battery 120. The heating apparatus 130 heats the battery 120 in response to the heating instruction.

The following provides a detailed description of how to control the temperature of the battery 120.

In some embodiments, the BMS 122 acquires a state parameter of the battery 120 and controls the temperature of the battery 120 according to the state parameter.

The state parameter includes, for example, at least one of the temperature of the battery 120, the SOC of the battery 120, the charging time of the battery 120, the voltage, and the current. By detecting the state parameter of the battery 120, a specific strategy for temperature control of the battery 120 is determined, so that the temperature of the battery 120 can be effectively regulated, and the impact of the temperature control on the charging process of the battery 120 can be reduced, thereby reducing unnecessary power consumption.

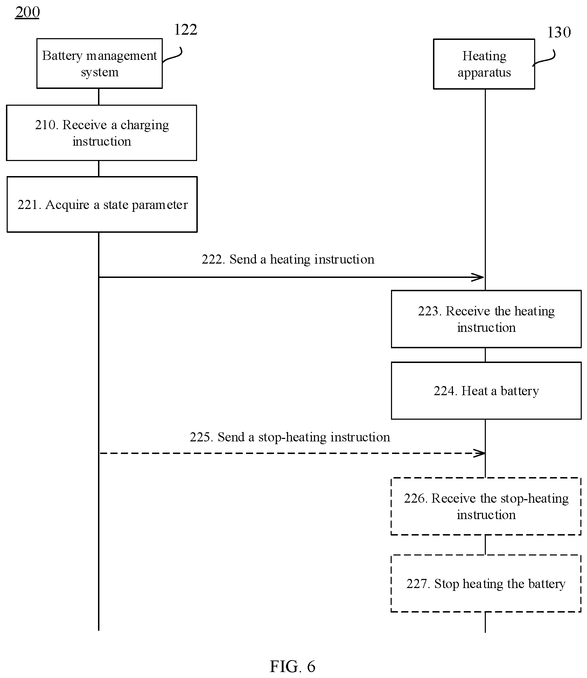

As an example, FIG. 6 illustrates a flow interaction diagram between the battery 120 and the heating apparatus 130. The charging method 200 shown in FIG. 3 may be performed by the battery 120 and the heating apparatus 130, and specifically, may be performed by the BMS 122 of the battery 120 and the heating apparatus 130. The heating apparatus 130 may be, for example, the charging apparatus 110 shown in FIG. 1 or other heating apparatuses arranged outside the battery 120, which will be described in detail later. The charging method 200 may include part or all of the following steps.

In step 210, the BMS 122 receives a charging instruction.

In step 221, the BMS 122 acquires a state parameter of the battery 120 in response to the charging instruction, such as the temperature and/or SOC of the battery 120.

In step 222, the BMS 122 sends a heating instruction to the heating apparatus 130 according to the state parameter. For example, the heating instruction is sent to the heating apparatus 130 in the case that the state parameter satisfies one condition.

In step 223, the heating apparatus 130 receives the heating instruction.

In step 224, the heating apparatus 130 heats the battery 120 according to the heating instruction.

Optionally, the charging method 200 may further include steps 225 to 227.

In step 225, the BMS 122 sends a stop-heating instruction to the heating apparatus 130 according to the state parameter. For example, the stop-heating instruction is sent to the heating apparatus 130 in the case that the state parameter satisfies another condition.

In step 226, the heating apparatus 130 receives the stop-heating instruction.

In step 227, the heating apparatus 130 stops heating the battery 120 according to the stop-heating instruction.

The following provides a detailed description of how the BMS 122 controls the heating of the battery 120 according to the state parameter of the battery 120.

In some embodiments, the state parameter may include the temperature of the battery 120. At this time, the BMS 122 may send the heating instruction to the heating apparatus 130 in the case that the temperature of the battery 120 is less than or equal to a first temperature threshold, where the heating instruction is defined to instruct the heating apparatus 130 to heat the battery 120.

For example, a temperature sensor may be provided on the battery cell 121. The temperature sensor collects the temperature of the battery cell 121 and reports the temperature to the BMS 122. It may be understood that in the case that the battery 120 includes a plurality of battery cells 121, temperature sensors may be provided on only some of the battery cells 121, or may be provided on all of the battery cells 121.

The temperature of the battery 120 described in the embodiments of the present application may be the average value or sum of the temperatures of the plurality of battery cells 121 provided with temperature sensors, or may be the temperature of a certain battery cell 121, such as the temperature of the battery cell 121 with the lowest or highest temperature, which is not limited in the present application.

The first temperature threshold may, for example, be equal to the lower limit value of the above preset temperature range. The BMS 122 instructs the heating apparatus 130 to heat the battery 120 in the case that the temperature of the battery 120 falls below the threshold. Alternatively, the first temperature threshold may also be within the preset temperature range, for example, slightly greater than the lower limit value of the temperature range. At this time, in the case that the temperature of the battery 120 has not fallen below the temperature range, the BMS 122 instructs the heating apparatus 130 to heat the battery 120, or to maintain the temperature, so as to maintain the temperature of the battery 120 within the temperature range.

Further, optionally, the BMS 122 may also send the stop-heating instruction to the heating apparatus 130 in the case that the battery 120 is heated to a temperature greater than or equal to a second temperature threshold, where the stop-heating instruction is defined to instruct the heating apparatus 130 to stop heating the battery 120.

The second temperature threshold is greater than or equal to the first temperature threshold. For example, the temperature threshold may be equal to the upper limit value of the above preset temperature range. The BMS 122 instructs the heating apparatus 130 to stop heating the battery 120 in the case that the temperature of the battery 120 exceeds the temperature range. Alternatively, the second temperature threshold may be slightly less than the upper limit value of the temperature range. At this time, in the case that the temperature of the battery 120 has not exceeded the temperature range, the BMS 122 instructs the heating apparatus 130 to stop heating the battery 120, so as to maintain the temperature of the battery 120 within the temperature range.

In other embodiments, the state parameter may include the SOC of the battery 120. At this time, the BMS 122 may send the heating instruction to the heating apparatus 130 in the case that the SOC of the battery 120 is greater than or equal to a first SOC threshold, where the heating instruction is defined to instruct the heating apparatus 130 to heat the battery 120.

The SOC is defined to characterize the remaining capacity of the battery 120, and may be expressed, for example, as a ratio of the remaining capacity of the battery 120 to the capacity of the battery 120. As an example, when detecting the SOC of the battery 120, the open circuit voltage (OCV) of the battery 120 may be detected, and based on a pre-set curve representing the relationship between the voltage and SOC of the battery 120, namely, a SOC-OCV curve, the SOC corresponding to the currently detected OCV is found.

For the battery 120 using the LiMPO₄ material as the positive electrode active material, the charging plateau corresponding to the Fe element and the charging plateau corresponding to the Mn element are sequentially undergone in the charging process. Since the DCR of the battery 120 in the charging plateau corresponding to the Mn element is 1.5 to 2 times that in the charging plateau corresponding to the Fe element, lithium ions become more difficult to deintercalate from the battery 120 mainly after reaching the charging plateau corresponding to the Mn element. In the case that the SOC of the battery 120 is greater than or equal to the first SOC threshold, the battery has already passed through the charging plateau corresponding to the Fe element and entered the charging plateau corresponding to the Mn element. At this time, controlling the temperature of the battery 120 can significantly improve the delithiation depth of the charging plateau corresponding to the Mn element, thereby increasing the charging capacity of the battery 120. Moreover, this approach has less impact on the charging process of the battery 120, reducing unnecessary power consumption.

It may be understood that the charging plateau refers, for example, to a stage in the charging process where the electrochemical reaction reaches an equilibrium state, during which the battery potential fluctuates slightly with the SOC within the charging plateau, or in other words, the battery potential remains relatively stable within the charging plateau.

As described above, during the charging process, the battery 120 will sequentially undergo the charging plateau corresponding to the Fe element and the charging plateau corresponding to the Mn element, with issues such as low delithiation depth occurring at the charging plateau corresponding to the Mn element. Therefore, to effectively improve the charging performance of the battery 120 and reduce unnecessary power consumption, in some embodiments, the first SOC threshold may be determined based on the molar ratio f of the Fe element in the iron-manganese element of the positive electrode active material.

For example, the first SOC threshold may be determined based on the product of the SOC of the battery 120 in a fully charged state and the molar ratio f of the Fe element in the iron-manganese element.

For the LiMPO₄ material, M includes Mn and Fe, the molar ratio f of the Fe element in the iron-manganese element is the ratio of the molar content of the Fe element to the total molar content of the Fe element and the Mn element.

It may be understood that the SOC of the battery 120 in the fully charged state is typically equal to 1. However, with the loss of the battery 120 during use, the SOC of the battery 120 in the fully charged state may gradually decrease, becoming less than 1. When determining the first SOC threshold, the actual SOC of the battery 120 in the fully charged state is used. The actual SOC of the battery 120 in the fully charged state is multiplied by the molar ratio f of the Fe element in the iron-manganese element, and the first SOC threshold is then determined.

Here, 0 < f < 1, and optionally, 0.01 ≤ f ≤ 0.6.

The ratio f of the Fe element in the iron-manganese element may be less than the ratio of the Mn element. For example, f may range from 0.001 to 0.5, such as 0.001, 0.002, 0.003, 0.004, 0.005, 0.007, 0.008, 0.009, 0.01, 0.02, 0.05, 0.07, 0.1, 0.15, 0.2, 0.25, 0.3, 0.35, 0.4, 0.45, 0.49, and 0.5.

The ratio f of the Fe element in the iron-manganese element may also be slightly greater than the ratio of the Mn element. For example, f may range from 0.5 to 0.6, such as 0.51, 0.52, 0.55, 0.57, 0.58, 0.59, and 0.6.

For example, assuming f = 0.3, the ratio of the Fe element to the Mn element in the LiMPO₄ material is 3:7, and the first SOC threshold may be 30% of the SOC of the battery 120 in the fully charged state. When the battery 120 is charged until its SOC reaches 30% of the SOC in the fully charged state, it indicates that the battery has undergone the charging plateau corresponding to the Fe element and is about to enter the charging plateau corresponding to the Mn element. Therefore, the temperature of the battery 120 needs to be controlled within the preset temperature range to improve the charging performance of the battery 120 in the charging plateau corresponding to the Mn element.

For another example, assuming f = 0.4, the ratio of Fe to Mn in the LiMPO₄ material is 4:6, and the first SOC threshold may be 40% of the SOC of the battery 120 in the fully charged state. When the battery 120 is charged until its SOC reaches 40% of the SOC in the fully charged state, it indicates that the battery has undergone the charging plateau corresponding to the Fe element and is about to enter the charging plateau corresponding to the Mn element. Therefore, the temperature of the battery 120 needs to be controlled within the preset temperature range to improve the charging performance of the battery 120 in the charging plateau corresponding to the Mn element.

It may be understood that the first SOC threshold may be equal to the product of the SOC of the battery 120 in the fully charged state and the molar ratio f of the Fe element in the iron-manganese element, i.e., to start heating the battery 120 in the case that the SOC of the battery 120 satisfies the condition. Alternatively, to heat the battery 120 in advance, so that the temperature of the battery 120 remains within the temperature range throughout the charging plateau corresponding to the entire Mn element, the first SOC threshold may be slightly less than the product of the SOC of the battery 120 in the fully charged state and the molar ratio f, allowing the battery 120 to be heated before the charging plateau corresponding to the Mn element is reached.

Alternatively, the first SOC threshold may be set according to the range of f. For example, in the case that f is within the range of 0 < f ≤ 0.1, the first SOC threshold may be set equal to 10% of the SOC of the battery 120 in the fully charged state. The BMS 122 controls the temperature of the battery 120 to remain within the preset temperature range in the case that the SOC of the battery 120 is greater than or equal to 10% of the SOC thereof in the fully charged state.

Further, optionally, the BMS 122 may also send the stop-heating instruction to the heating apparatus 130 in the case that the SOC of the battery 120 is less than or equal to a second SOC threshold, where the stop-heating instruction is defined to instruct the heating apparatus 130 to stop heating the battery 120.

During the heating process of the battery 120, the SOC of the battery 120 may decrease when using the power of the battery 120 for heating. The heating of the battery 120 is stopped in the case that the SOC of the battery 120 is less than or equal to the second SOC threshold, which can reduce the probability of SOC depletion and other issues of the battery 120 caused by its lower SOC, helping maintain a healthy mileage. The second SOC threshold may be equal or unequal to the first SOC threshold.

Certainly, in other embodiments, the state parameter may include both the temperature and SOC of the battery 120. The BMS 122 may send the heating instruction to the heating apparatus 130 in the case that the temperature of the battery 120 is less than or equal to the first temperature threshold and the SOC of the battery 120 is greater than or equal to the first SOC threshold, where the heating instruction is defined to instruct the heating apparatus 130 to heat the battery 120.

Further, optionally, the BMS 122 may also send the stop-heating instruction to the heating apparatus 130 in the case that the battery 120 is heated to a temperature greater than or equal to the second temperature threshold, and/or the SOC of the battery 120 is less than or equal to the second SOC threshold, where the stop-heating instruction is defined to instruct the heating apparatus 130 to stop heating the battery 120.

In the embodiments of the present application, the BMS 122 may specifically send the heating instruction to the heating apparatus 130 before or during the charging process of the battery 120 to instruct the heating apparatus 130 to heat the battery 120, thereby minimizing the impact of the heating process on the charging process.

For example, before the charging process, the heating instruction is sent to the heating apparatus 130. After the heating apparatus 130 heats the battery 120 to a temperature within the preset temperature range, the battery 120 is controlled to enter the charging process.

For another example, during the charging process, the heating instruction is sent to the heating apparatus 130, the heating apparatus 130 being configured to heat the battery 120 in parallel during the charging process.

For another example, during the charging process, the heating instruction is sent to the heating apparatus 130, and the duration for which the charging process is paused for heating is controlled, the heating apparatus 130 being configured to heat the battery 120 within the duration.

It can be seen that the BMS 122 may control the temperature of the battery 120 to remain within the preset temperature range throughout the entire charging process. The BMS 122 may also control the temperature of the battery 120 to remain within the temperature range during part of the stages of the charging process. For example, the BMS determines, according to the state parameter of the battery 120, at which stages of the charging process the temperature remains within the preset temperature range.

For example, assuming that the temperature of the battery 120 is less than the first temperature threshold, and the SOC of the battery 120 gradually increases during the charging process, when the SOC reaches the first SOC threshold, heating of the battery 120 may begin to bring its temperature within the preset temperature range. In this case, it may be understood that the BMS 122 controls the temperature of the battery 120 to remain within the temperature range only during part of the stages of the charging process, namely a stage where the SOC is greater than the first SOC threshold.

The embodiments of the present application provide two types of heating apparatuses 130 for heating the battery 120, which are described below, respectively. It is to be understood that, in addition to the heating apparatus 130 provided in the embodiments of the present application, other apparatuses that can be configured to heat the battery 120 may also be used in the charging solutions of the embodiments of the present application to achieve temperature regulation of the battery 120.

### Heating method 1

In the heating method, the heating apparatus 130 is electrically connected to the battery 120, and the heating apparatus 130 is configured to provide a pulse current to the battery 120 in response to the heating instruction, so that the battery 120 generates heat when the pulse current passes through the battery 120.

The heating method may also be referred to as pulse heating, internal heating, or self-heating, that is, using a pulse current to heat the battery 120; the heating apparatus 130 is electrically connected to the battery 120, and the heating apparatus 130 provides a pulse current to the battery 120 in response to the heating instruction of the BMS 122. When the pulse current passes through the battery 120, the battery 120 can generate heat due to its own internal resistance, thereby achieving the self-heating of the battery 120. The heating method requires no additional hardware heating structures, which helps reduce the structural complexity of the battery 120.

In some embodiments, the heating apparatus 130 includes a charging apparatus 110 for charging the battery 120, and the charging apparatus 110 is configured to charge the battery 120 based on the pulse current in response to the heating instruction. The charging apparatus 110 may be, for example, a charging pile or a charger.

Optionally, the BMS 122 determines the information of the pulse current for heating the battery 120 according to the difference between the current temperature of the battery 120 and the first temperature threshold, and sends the information to the charging apparatus 110. The charging apparatus 110 charges the battery 120 based on the pulse current. In each cycle, charging of the battery 120 by the charging apparatus 110 and discharging of the battery to the charging apparatus 110 are achieved in sequence, thereby achieving the self-heating of the battery 120 during the charging and discharging processes.

In other embodiments, the heating apparatus 130 includes a motor in the electric device containing the battery 120, and the motor includes a winding and a control circuit connected between the winding and the battery 120. The BMS 122 may specifically send the heating instruction to a control module in the electric device, such as a VCU in a vehicle. The control module controls the control circuit in response to the heating instruction, so that the motor charges the battery 120 based on the pulse current. In this way, the heat generated by the working loss of the motor in the electric device can be used to heat the battery 120 without consuming additional electric energy.

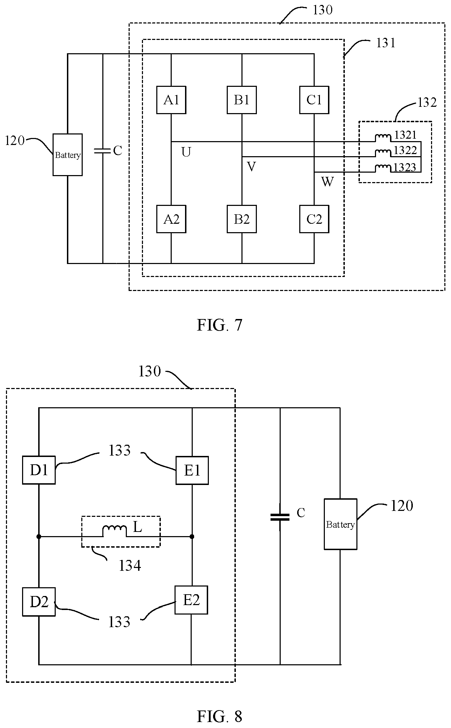

As an example, FIG. 7 illustrates a schematic circuit diagram of a possible heating system for heating the battery 120 by using a motor. As shown in FIG. 7, the heating system includes a battery 120, a control circuit 131 connected to the battery 120, and a winding 132 of a motor connected to the control circuit 131.

The control circuit 131 may be implemented by an inverter in the drive system of the motor, and the inverter may be implemented, for example, by using bridge arm switches made of insulated gate bipolar transistors (IGBTs), i.e., the switch A1, switch A2, switch B1, switch B2, switch C1, and switch C2 as shown in FIG. 7.

FIG. 7 illustrates a three-phase motor as an example, including three-phase windings, namely the winding 1321, the winding 1322, and the winding 1323. Accordingly, the control circuit 131 is a three-phase bridge arm circuit, including three bridge arms connected to the three windings, respectively, namely the bridge arm where the switch A1 and the switch A2 are located, the bridge arm where the switch B1 and the switch B2 are located, and the bridge arm where the switch C1 and the switch C2 are located.

During the heating process, the switches in the control circuit 131 are controlled separately based on the corresponding timing, so that the current directions in the different circuits formed between the battery 120, the switches, and the winding 132 are different, thereby generating a pulse current and then alternately charging and discharging the battery 120, and heating the battery 120 in the process.

In the case that the BMS 122 determines that the battery 120 needs to be heated according to the state parameter of the battery 120, the heating instruction can be sent to the VCU. The VCU controls the control circuit 131 in response to the heating instruction to heat the battery 120 through the motor.

In other embodiments, the heating apparatus 130 includes a heating circuit, and the heating circuit includes an energy storage element and a switch module; the switch module is configured to form a circuit where the energy storage element charges the battery 120 and a circuit where the battery 120 discharges to the energy storage element in response to the heating instruction, so that the energy storage element charges the battery 120 based on the pulse current.

For example, as shown in FIG. 8, the heating circuit 130 includes a switch module 133 and an energy storage element 134. The switch module 133 includes a bridge arm circuit formed by a switch D1, a switch D2, a switch E1, and a switch E2, where the switch D1 and the switch D2 are located in one bridge arm, and the switch E1 and the switch E2 are located in another bridge arm. The switch D1, the switch D2, the switch E1, and the switch E2 may, for example, be implemented by using IGBTs. The energy storage element 134 may, for example, include an inductor, a capacitor, or a combination of an inductor and a capacitor. FIG. 8 illustrates an inductor L as an example. One end of the inductor L is connected between the switch D1 and the switch D2, and the other end is connected between the switch E1 and the switch E2.

During the heating process, by controlling the switches in the switch module 133, a circuit where the power battery 120 discharges to the energy storage element 134 and a circuit where the energy storage element 134 charges the power battery 120 are formed, thereby generating a pulse current, alternately charging and discharging the battery 120, and heating the battery 120 in the process.

In the case that the BMS 122 determines that the battery 120 needs to be heated according to the state parameter of the battery 120, the heating instruction is sent to the VCU. The VCU controls the switch module 133 in response to the heating instruction to heat the battery 120 through the heating circuit 130.

The battery 120 is heated by using an additional heating circuit 130. In the case that the electric device, such as a vehicle, is not connected to the charging apparatus 110, or the motor of the electric device is in operation, the battery 120 can be preheated, thereby saving the user's time.

In the case that the battery 120 needs to be heated, the control module of the electric device, such as a vehicle, may send the charging instruction to the heating circuit 130 to instruct the heating circuit 130 to heat the battery 120. If the battery 120 is not connected to the charging apparatus 110 at this time, the heating circuit 130 may heat the battery 120 to the preset temperature range in response to the charging instruction and maintain the temperature, so that the temperature of the battery 120 can maintain within the temperature range during at least part of the stages of the process in which the battery is connected to the charging pile 110 for charging. Alternatively, the heating circuit 130 may heat the battery 120 to a temperature exceeding the preset temperature range in response to the charging instruction, so that the temperature of the battery 120 can remain within the range during at least part of the stages of the process in which the battery is connected to the charging pile 110 for charging.

### Heating method 2

In the heating method, the battery 120 includes a heating apparatus 130; the heating apparatus 130 is arranged outside the housing of the battery 120, and the heating apparatus 130 is configured to generate heat in response to the heating instruction to heat the battery 120 through the heat transfer between the heating apparatus 130 and the battery 120.

The heating may also be referred to as external heating. The heating apparatus 130 is arranged outside the housing of the battery 120. The heating apparatus 130 generates heat in response to the heating instruction of the BMS 122 and heats the battery 120 through the heat transfer between the heating apparatus 130 and the battery 120. The heating method may be performed during the charging process of the battery 120, that is, the battery 120 may be heated simultaneously during the charging process of the battery 120, without affecting the charging process of the battery 120.

In some embodiments, the heating apparatus 130 includes a heating film, and the heating film includes a conductive layer and an insulating layer located between the conductive layer and the housing; the conductive layer is configured to generate heat during the passage of current and transfer the heat to the battery 120, and the insulating layer is configured to electrically isolate the conductive layer from the battery 120.

The conductive layer includes a resistor heating element, such as a metal heating wire, which generates heat after being energized. The heating film may, for example, be adhered to the surface of the battery cell 121 through an adhesive material, and the generated heat is transferred to the interior of the battery cell 121 through the contact between the heating film and the surface of the battery 120, offering the advantages of simple heating structure and being capable of being integrated into the battery system.

In other embodiments, the heating apparatus 130 includes a heat-generating component and a heat-conducting component, and the heat-conducting component accommodates a heat-conducting medium therein; the heat-generating component is configured to generate heat during the passage of current, and the heat-conducting medium in the heat-conducting component is configured to transfer the heat generated by the heat-generating component to the battery 120.

The heat-generating component may be an active heating device, for example, may be a positive temperature coefficient (PTC) heating component or a high volgate heater (HVH).

The heat-conducting component may be, for example, a water-cooling component, and accordingly, the heat-conducting medium in the heat-conducting component may be a liquid. Optionally, the heat-conducting component may reuse the water-cooling plate of the battery 120, the heat generated by the heat-generating component is transferred to the liquid in the water-cooling plate, and the battery 120 is heated or its temperature is maintained.

In other embodiments, the heating apparatus 130 may also be a passive heating device including, for example, a heat pump and a hydrothermal pipeline arranged around the battery 120. The hydrothermal pipeline is connected to the heat pump, and the heat pump is configured to control the circulating inflow and outflow of the liquid in the hydrothermal pipeline, thereby heating the battery 120 through the liquid in the process. The heat source of the heat pump may, for example, be derived from the heat generated by the battery 120 during operation. The hot liquid in the hydrothermal pipeline is subjected to heat exchange after passing through the heat pump. For example, the liquid entering the hydrothermal pipeline from the heat pump has a higher temperature, while the liquid flowing out of the hydrothermal pipeline into the heat pump has a lower temperature. In this way, during the circulation of the liquid, heat is transferred to the battery 120 through the liquid.

Optionally, a control valve is provided on the heat pump, and the BMS 122 may determine the opening degree of the control valve according to the difference between the current temperature of the battery 120 and the first temperature threshold to adjust the temperature of the liquid entering the hydrothermal pipeline. For example, the greater the difference between the current temperature of the battery 120 and the first temperature threshold, the larger the opening degree of the control valve, resulting in a higher temperature of the liquid entering the hydrothermal pipeline; conversely, the less the difference between the current temperature of the battery 120 and the first temperature threshold, the smaller the opening of the control valve, leading to a relatively lower temperature of the liquid entering the hydrothermal pipeline.

In the embodiments of the present application, one heating method may be configured for the battery 120, that is, either heating method 1 or heating method 2 is used to heat the battery 120; alternatively, both heating methods may be configured for the battery 120 simultaneously, and a selection or switch is made between the two heating methods based on the state parameter of the battery 120. The heating method 1 is a pulse heating method, which uses a pulse current to heat the battery 120; the heating method 2 is an external heating method, which heats the battery 120 through the heat transfer between the heating apparatus 130 and the battery 120.

In some embodiments, the BMS 122 may determine a heating method for heating the battery 120 according to the temperature of the battery 120, and send the heating instruction to the corresponding heating apparatus 130 according to the determined heating method.

Since different heating methods are applied in different scenarios, such as variations in heating efficiency and the ambient temperature of the battery 120, the appropriate heating method can be selected according to the temperature of the battery 120 to improve heating efficiency and reduce the time required for the battery 120 to reach the preset temperature range.

Optionally, in the case that the temperature of the battery 120 is less than a third temperature threshold, the heating method is determined to be a method for heating the battery 120 based on the pulse current, namely the above heating method 1; in the case that the temperature of the battery 120 is greater than the third temperature threshold, the heating method is determined to be a method for heating the battery 120 through external heating, namely the above heating method 2.

Specifically, the third temperature threshold may be determined, for example, based on a heating rate during pulse heating. In the case that the temperature of the battery 120 is equal to the third temperature threshold, the heating rate of the battery 120 during heating of the battery 120 by using the pulse heating method may be substantially the same as the corresponding heating rate during heating of the battery 120 by using the external heating method. Optionally, the third temperature threshold may be set between 0 °C and 20 °C, and further may be between 0 °C and 10 °C, for example, may be 0 °C, 2 °C, 3 °C, 4 °C, 5 °C, 10 °C, 15 °C, or 20 °C. Since the heating rate corresponding to the pulse heating method is about 2 °C/min, when the battery 120 is heated to the third temperature threshold, the internal resistance of the battery 120 changes, which will cause the heating rate to decrease. At this time, the battery 120 may be heated by using the external heating method.

In some embodiments, the BMS 122 may also determine a heating method for heating the battery 120 according to the heating rates of the battery 120 under different heating methods. For example, in the case that the temperature of the battery 120 reaches the third temperature threshold, the pulse heating method is switched to the external heating method, and the heating rate of the battery 120 corresponding to the external heating method is measured. If the heating rate of the battery 120 does not significantly improve or even decreases, for example, the heating rate corresponding to the external heating method is lower than the heating rate corresponding to the pulse heating method, and the difference between the heating rates corresponding to the external heating method and the pulse heating method is greater than a certain heating threshold, the external heating method may be switched back to the pulse heating method.

Generally, when the battery 120 is heated by using the pulse heating method, the charging apparatus 110 cannot perform conventional charging on the battery 120 simultaneously; however, when the battery 120 is heated by using the external heating method, the charging apparatus 110 can perform conventional charging on the battery simultaneously.

Optionally, the pulse heating method may be disabled and the external heating method is called in the case that the battery 120 is not connected to the charging apparatus 110. For example, a heat pump heating method may be called to heat the battery 120 to save energy and protect the SOC of the battery.

Optionally, in the case that the SOC of the battery 120 is relatively low, other heating methods that consume the SOC of the battery 120 may be disabled; in the case that the SOC of the battery 120 is relatively high, various external heating methods including the heat pump heating method may be used simultaneously to heat the battery 120.

In the embodiments of the present application, one or more charging methods may be used to perform conventional charging on the battery 120, such as one or more of constant current charging, constant voltage charging, constant power charging, or first constant current and then constant voltage charging.

Taking the first constant current and then constant voltage charging as an example, the BMS 122 sends a charging parameter to the charging apparatus 110, where the charging parameter includes the information of a constant current and a constant voltage, so that the charging apparatus 110 charges the battery 120 based on the constant current, and in the case that the battery 120 is charged to a voltage greater than or equal to a voltage threshold based on the constant current, charges the battery 120 based on the constant voltage until the battery 120 reaches the fully charged state.

After constant current charging, the battery 120 is further subjected to constant voltage charging, which helps eliminate polarization within the battery cell 121, thereby further fully utilizing the capacity of the battery 120 while improving the charging rate.

Optionally, in the case that the SOC of the battery 120 is greater than or equal to a certain threshold, the battery 120 may be subjected to constant current charging based on a first constant current until the voltage threshold is reached, and then subjected to constant voltage charging based on a first constant voltage until reaching the fully charged state; or, in the case that the SOC of the battery 120 is less than the threshold, the battery 120 may first be charged based on a second constant current until its SOC reaches the threshold, and the battery 120 is then subjected to constant current charging based on the first constant current until the voltage threshold is reached and subjected to constant voltage charging based on the first constant voltage until reaching the fully charged state.

The first constant current used in the constant current charging stage may, for example, be between 0.01 C and 0.1 C, and/or the first constant voltage used in the constant voltage charging stage may be between 3.95 V and 4.35 V

The battery 120 and the corresponding charging method 200 described above have a good charging effect on the battery 120 with a positive electrode active material of LiMPO₄ material, and can improve the charging capacity and charging rate of the battery 120.

The above methods, steps, processes, and the like may all be performed by the BMS 122 of the battery 120, that is, the BMS 122 may be configured to perform these methods, steps, processes, and the like.

The embodiments of the present application may be applied to various types of batteries, especially the battery 120 using the LiMPO₄ material as the positive electrode active material, where M in the LiMPO₄ material may include Mn element and Fe element. The LiMPO₄ material is described in detail below.

As an implementation of the LiMPO₄ material, LiMPO₄ may be a compound of the chemical formula LiMn_{1-y}Fe_{y}PO₄, where y is any value in the range of 0.001 to 0.5.

Taking the compound LiMn_{0.80}Fe_{0.20}PO₄ as an example, the preparation method of the compound LiMn_{0.80}Fe_{0.20}PO₄ is illustrated. The preparation method may include, for example, the following steps.

In S1, Fe-doped manganese oxalate was prepared.

For example, 919.4 g of manganese carbonate and 231.7 g of ferrous carbonate were added to a mixer and thoroughly mixed for 6 h. The resulting mixture was then transferred to a reactor, and 5 L of deionized water and 1260.6 g of oxalic acid dihydrate were added. The mixture was heated to 80 °C, thoroughly stirred at 500 rpm for 6 h, and uniformly mixed until the reaction was terminated and no bubble was generated to obtain a Fe-doped manganese oxalate suspension. The suspension was then filtered, dried at 120 °C, and sand-milled to obtain ferromanganese oxalate particles with a particle size of 100 nm.

In S2, LiMn_{0.80}Fe_{0.20}PO₄ was prepared.

For example, 1791.4 g of ferromanganese oxalate (calculated as C₂O₄Mn_{0.80}Fe_{0.20}•2H₂O) prepared in S1, 369.4 g of lithium carbonate, and 1150.1 g of ammonium dihydrogen phosphate were added to 20 L of deionized water, thoroughly stirred, uniformly mixed, and reacted at 80 °C for 10 h to obtain a slurry. The slurry was transferred to a spray dryer for spray drying and granulation, and dried at 250 °C to obtain a powder. The powder was sintered in a roller kiln at 700 °C for 4 h under a protective atmosphere, such as 90% nitrogen and 10% hydrogen.

As another implementation of the LiMPO₄ material, LiMPO₄ may be a compound of the chemical formula Li₁₊ₜMn_{1-c}Fe_{c}P_{1-z}R_{z}O₄, where t is any value in the range of -0.100 to 0.100, c is any value in the range of 0.001 to 0.500, z is any value in the range of 0.001 to 0.100, and R includes one or more elements selected from B, S, Si, and N.

The values of t, c, and z are configured so that the entire compound remains electrically neutral. Optionally, the ratio of c to 1-c may be 1:10 to 1:1, and further be 1:4 to 1:1, where c represents the sum of the stoichiometric amounts of the doped element Fe at the Mn site. Optionally, the ratio of z to 1-z may be 1:9 to 1:999, and further be 1:499 to 1:249, where z represents the sum of the stoichiometric numbers of the doped element R at the P site.

Illustratively, the preparation method of the compound Li₁₊ₜMn_{1-c}Fe_{c}P_{1-z}R_{z}O₄ may include the following steps.

In S1, a manganese source, an iron source, and an acid were dissolved in a solvent and stirred to form a suspension of a manganese salt doped with element Fe. The suspension was then filtered, and the filter cake was dried to obtain a manganese salt doped with element Fe.

In S2, a lithium source, a phosphorus source, a source of element R, a solvent, and the manganese salt doped with element Fe obtained in S1 were added to a reactor, ground, and mixed to obtain a slurry.

In S3, the slurry obtained in S2 was transferred to a spray dryer for spray drying and granulation to obtain particles.

In S4, the particles obtained in S3 were sintered to obtain a positive electrode active material.

The manganese source is, for example, a manganese-containing substance that may be used to prepare lithium manganese phosphate, including but not limited to one or a combination of more of elemental manganese, manganese dioxide, manganese phosphate, manganese oxalate, and manganese carbonate. The iron source is, for example, at least one selected from elemental iron and oxide, phosphate, oxalate, carbonate, and sulfate of iron. The acid is, for example, one or more selected from hydrochloric acid, sulfuric acid, nitric acid, phosphoric acid, organic acids, and the like, such as oxalic acid. The source of element R is, for example, at least one selected from sulfate, borate, nitrate, and silicate of element R.

Taking the compound Li_{1.001}Mn_{0.999}Fe_{0.001}P_{0.999}Si_{0.001}O₄ as an example, the preparation method thereof may include the following steps.

In S1, Fe-doped manganese oxalate was prepared.

For example, 1148.2 g of manganese carbonate and 1.2 g of ferrous carbonate were added to a mixer and thoroughly mixed for hours. The resulting mixture was then transferred to a reactor, and 5 L of deionized water and 1260.6 g of oxalic acid dihydrate were added. The mixture was heated to 80 °C, thoroughly stirred at 500 rpm for 6 h, and uniformly mixed until the reaction was terminated and no bubble was generated to obtain a Fe-doped manganese oxalate suspension. The suspension was then filtered, dried at 120 °C, and sand-milled to obtain ferromanganese oxalate particles with a particle size of 100 nm.

In S2, Li_{1.001}Mn_{0.999}Fe_{0.001}P_{0.999}Si_{0.001}O₄ was prepared.

1789.6 g of ferromanganese oxalate (calculated as C₂O₄Mn_{0.999}Fe_{0.001}•2H₂O) prepared in S1, 369.8 g of lithium carbonate, 1148.9 g of ammonium dihydrogen phosphate, and 0.8 g of metasilicic acid were added to 20 L of deionized water, thoroughly stirred, uniformly mixed, and reacted at 80 °C for 10 h to obtain a slurry. The slurry was transferred to a spray dryer for spray drying and granulation, and dried at 250 °C to obtain a powder. The powder was sintered in a roller kiln at 700 °C for 4 h under a protective atmosphere, such as 90% nitrogen and 10% hydrogen.

As another implementation of the LiMPO₄ material, LiMPO₄ may be a compound of the chemical formula Li_{1+w}CₘMn₁₋ᵤFeᵤP₁₋ₐRₐO₄₋ₙDₙ, where C includes one or more elements selected from Zn, Al, Na, K, Mg, Nb, Mo, and W, R includes one or more elements selected from B, S, Si, and N, D includes one or more elements selected from S, F, Cl, and Br, w is any value in the range of -0.100 to 0.100, u is any value in the range of 0.001 to 0.500, a is any value in the range of 0.001 to 0.100, n is any value in the range of 0.001 to 0.1, and m is any value in the range of 0.9 to 1.1.

Similarly, the values of w, u, a, and m described above are configured so that the entire compound remains electrically neutral.

Illustratively, the preparation method of the compound Li_{1+w}CₘMn₁₋ᵤFeᵤP₁₋ₐRₐO₄₋ₙDₙ may include the following steps.

In S1, a manganese source, an iron source, and an acid were dissolved in a solvent and stirred to form a suspension of a manganese salt doped with element Fe. The suspension was then filtered, and the filter cake was dried to obtain a manganese salt doped with element Fe.

In S2, a lithium source, a phosphorus source, a source of element C, a source of element R, a source of element D, a solvent, and the manganese salt doped with element Fe obtained in S1 were added to a reactor, ground, and mixed to obtain a slurry.

In S3, the slurry obtained in S2 was transferred to a spray dryer for spray drying and granulation to obtain particles.

In S4, the particles obtained in S3 were sintered to obtain a positive electrode active material.

The source of element C is, for example, at least one selected from the elemental form, oxide, phosphate, oxalate, carbonate, and sulfate of element C. The manganese source is, for example, a manganese-containing substance that can be used to prepare lithium manganese phosphate, including but not limited to one or a combination of elemental manganese, manganese dioxide, manganese phosphate, manganese oxalate, and manganese carbonate. The iron source is, for example, at least one selected from elemental iron and oxide, phosphate, oxalate, carbonate, and sulfate of iron. The acid is, for example, one or more selected from hydrochloric acid, sulfuric acid, nitric acid, phosphoric acid, organic acids, and the like, such as oxalic acid. The source of element R is, for example, at least one selected from sulfate, borate, nitrate, and silicate of element R. The source of element D is, for example, at least one selected from the elemental form and an ammonium salt of element D.

For the case that the positive electrode active material may contain Li_{1+w}CₘMn₁₋ᵤFeᵤP₁₋ₐRₐO₄₋ₙDₙ, the value of x is influenced by the valence states of Fe and R, as well as by the values of y and z, to ensure that the entire system remains electrically neutral. If the value of x is too small, the lithium content of the entire system is reduced, affecting the specific capacity performance of the material. The value of y limits the total amount of all doped elements. If y is too small, namely if the doping amount is insufficient, the doped elements will not be effective. If y exceeds 0.5, the Mn content in the system is reduced, affecting the voltage plateau of the material. The R element is doped at the position of P. Since the P-O tetrahedron is relatively stable, and the value of z that is too large will affect the stability of the material, the value of a is limited to the range of 0.001 to 0.100. More specifically, w is any value in the range of -0.100 to 0.100, u is any value in the range of 0.001 to 0.500, a is any value in the range of 0.001 to 0.100, n is any value in the range of 0.001 to 0.1, and m is any value in the range of 0.9 to 1.1. For example, 1+x is selected from the range of 0.9 to 1.1, such as 0.97, 0.977, 0.984, 0.988, 0.99, 0.991, 0.992, 0.993, 0.994, 0.995, 0.996, 0.997, 0.998, or 1.01. x is selected from the range of 0.001 to 0.1, such as 0.001 or 0.005. y is selected from the range of 0.001 to 0.5, such as 0.001, 0.005, 0.02, 0.05, 0.1, 0.15, 0.2, 0.25, 0.3, 0.34, 0.345, 0.349, 0.35, or 0.4. z is selected from the range of 0.001 to 0.1, such as 0.001, 0.005, 0.08, or 0.1. n is selected from the range of 0.001 to 0.1, such as 0.001, 0.005, 0.08, or 0.1. Furthermore, the positive electrode active material is electrically neutral.

Unless otherwise specified, in the above chemical formula, in the case that a doping site contains more than two elements, the above limitation on the numerical ranges of w, u, a, or m is not only a limitation on the stoichiometric number of each element at the site, but also a limitation on the sum of the stoichiometric numbers of all elements at the site. For example, in the case of a compound having the chemical formula Li_{1+w}Mn₁₋ᵤFeᵤP₁₋ₐRₐO₄, if R is composed of two or more elements R1, R2, ..., Rn, the stoichiometric numbers z1, z2, ..., zn for R1, R2, ..., Rn must each fall within the numerical range defined for z in the present application, and the sum of z1, z2, ..., zn must also fall within this numerical range. Similarly, when C is composed of two or more elements, the limitation on the numerical range of the stoichiometric number of C also has the same meaning as described above.

With the development of charging technology, in the embodiments of the present application, the charging apparatus 110 can not only serve as an energy source to supply electric energy to the battery 120, but also function as a control apparatus to control the above charging process and the heating process performed during, before, or after the charging process.

In this scenario, the BMS 122 of the battery 120 is configured to collect the state parameter of the battery 120, and the charging apparatus 110 can control the temperature of the battery 120 according to the state parameter.

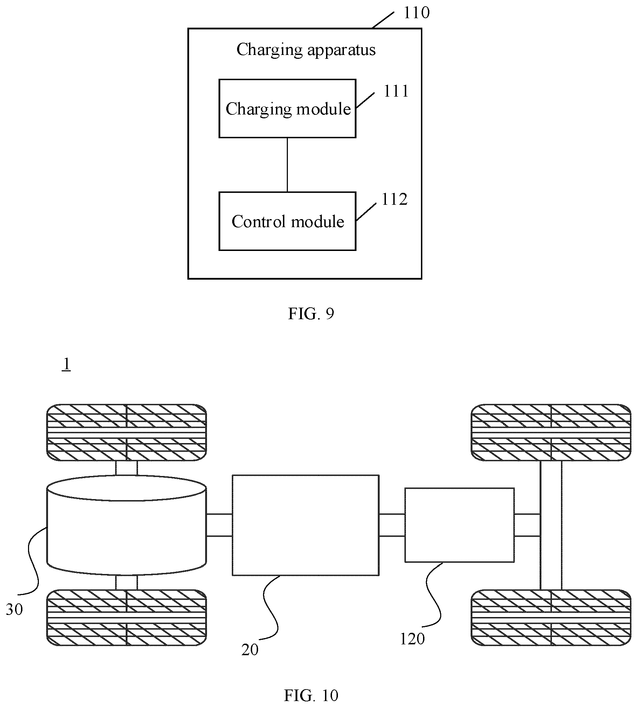

For example, as shown in FIG. 9, the present application further provides a charging apparatus 110, which can not only serve as an energy source to provide electric energy to the battery 120, but also function as a control apparatus to control the above charging process and the heating process performed during, before, or after the charging process. The charging apparatus 110 in the scenario is described below.

The charging apparatus 110 includes a charging module 111 and a control module 112. The charging module 111 is configured to charge the battery 120; the control module 112 is configured to control the temperature of the battery 120 in response to a charging instruction, so that the temperature of the battery 120 remains within a preset temperature range during at least part of stages of a charging process.

In the embodiment, the charging apparatus 110 may also be configured with a temperature control function for the battery 120, to control the temperature of the battery 120 remain within the preset temperature range during at least part of the stages of the charging process, thereby reducing the complexity of the BMS 122.

For example, the control module 112 is specifically configured to acquire the information of the positive electrode active material of the battery 120, and control the temperature of the battery 120 in the case that the positive electrode active material includes LiMPO₄, where M includes Mn element and Fe element.

In some embodiments, the charging apparatus 110 further includes a transceiver module configured to receive the charging instruction.

In some embodiments, the control module 112 is specifically configured to determine whether the charging apparatus 110 is reserved or occupied; the transceiver module is further configured to send a charging rejection instruction in the case that the control module 112 determines that the charging apparatus 110 is reserved or occupied, where the charging rejection instruction is defined to instruct that the charging apparatus 110 is reserved or occupied.

In some embodiments, the transceiver module is further configured to send a charging permission instruction in the case that the control module 112 determines that the charging apparatus 110 is not reserved or occupied, where the charging permission instruction is defined to instruct that the charging apparatus 110 is not reserved or occupied, and receive a charging reservation instruction, where the charging reservation instruction is defined to request a reservation for the charging apparatus 110.

In some embodiments, the control module 112 is specifically configured to receive the state parameter of the battery 120 sent by the BMS 122 of the battery 120, and control the temperature of the battery 120 according to the state parameter.

For example, the state parameter includes the temperature of the battery 120.

The control module 112 is specifically configured to send a heating instruction to the BMS 122 in the case that the temperature of the battery 120 is less than or equal to a first temperature threshold, where the heating instruction is defined to instruct the BMS 122 to control the heating apparatus 130 to heat the battery 120.

Further, the control module 112 is further configured to send a stop-heating instruction to the BMS 122 in the case that the battery 120 is heated to a temperature greater than or equal to a second temperature threshold, where the second temperature threshold is greater than or equal to the first temperature threshold, and the stop-heating instruction is configured to instruct the BMS 122 to control the heating apparatus 130 to stop heating the battery 120.

For another example, the state parameter includes the SOC of the battery 120.

The control module 112 is specifically configured to send the heating instruction to the BMS 122 in the case that the temperature of the battery 120 is less than or equal to the first temperature threshold and the SOC of the battery 120 is greater than or equal to a first SOC threshold.

Further, the control module 112 is specifically configured to send the stop-heating instruction to the BMS 122 in the case that the battery 120 is heated to a temperature greater than or equal to the second temperature threshold, and/or the SOC of the battery 120 is less than or equal to a second SOC threshold.

In some embodiments, the first SOC threshold and/or the second SOC threshold is determined based on the molar ratio of the Fe element in the iron-manganese element of the positive electrode active material. For example, the first SOC threshold and/or the second SOC threshold is the product of the SOC of the battery 120 in a fully charged state and the molar ratio.

In the embodiments of the present application, the charging apparatus 110 may specifically send the heating instruction to the BMS 122 before charging the battery 120 or during the charging process of the battery 120 to heat the battery 120, thereby minimizing the impact of the heating process on the charging process. For example, before the charging process, the heating instruction is sent to the BMS 122, and in the case that the heating apparatus 130 heats the battery 120 to a temperature within the temperature range, the battery 120 is controlled to enter the charging process; for another example, during the charging process, the heating instruction is sent to the BMS 122, the heating apparatus 130 being configured to heat the battery 120 in parallel during the charging process; for another example, during the charging process, the heating instruction is sent to the BMS 122, and the duration for which the charging process is paused for heating is controlled, the heating apparatus 130 being configured to heat the battery 120 within the duration.

In some embodiments, the heating apparatus 130 is electrically connected to the battery 120, and the BMS 122 is configured to control the heating apparatus 130 to provide a pulse current to the battery 120 in response to the heating instruction, so that the battery 120 generates heat when the pulse current passes through the battery 120.

In some embodiments, the battery 120 includes a heating apparatus 130 and the heating apparatus 130 is arranged outside the housing of the battery 120. The battery 120 management module is configured to control the heating apparatus 130 to generate heat in respond to the heating instruction to heat the battery 120 through the heat transfer between the heating apparatus 130 and the battery 120.

In some embodiments, the control module 112 is further configured to determine a heating method for heating the battery 120 according to the temperature of the battery 120, and send, according to the heating method, the heating instruction to the BMS 122 of the battery 120, where the heating instruction is defined to control the corresponding heating apparatus 130 to heat the battery 120.

For example, the control module 112 is specifically configured to determine the heating method to be a first heating method in the case that the temperature of the battery 120 is less than a third temperature threshold, where the first heating method is a method for heating the battery 120 based on the pulse current, and determine the heating method to be a second heating method in the case that the temperature of the battery 120 is greater than the third temperature threshold, where the second heating method is a method for heating the battery 120 through heat transfer.

Before the battery 120 is connected to the charging apparatus 110, the charging apparatus 110 receives the charging instruction. In the case that the charging apparatus 110 has already been reserved or occupied, the charging rejection instruction is returned in response to the charging instruction. In the case that the charging apparatus 110 is reserved or occupied, the charging permission instruction is returned in response to the charging instruction, instructing that the battery 120 can be charged.

After the battery 120 is connected to the charging apparatus 110, the information of the battery 120 may be acquired. In the case that the battery 120 is matched with the charging apparatus, for example, when the positive electrode active material used in the battery 120 is LiMPO₄, or the battery 120 is determined to be matched with the charging apparatus 110 by identifying the battery's identifier, or the like, it can then be determined whether to use the first heating method or the second heating method to heat the battery 120 according to the third temperature threshold.

Further, as the temperature of the battery 120 increases, after reaching the third temperature threshold, the first heating method is switched to the second heating method, and then the heating rate of the battery 120 may be measured. In the case that the heating rate does not significantly improve or even decreases, the second heating method is switched back to the first heating method.

In some embodiments, the charging module 111 is further configured to receive a charging parameter sent by the BMS 122 of the battery 120, where the charging parameter includes the information of a constant current and a constant voltage, charge the battery 120 based on the constant current, and in the case that the battery 120 is charged to a voltage greater than or equal to a voltage threshold based on the constant current, charges the battery 120 based on the constant voltage until the battery 120 reaches the fully charged state. The battery 120 may be charged by using a charging method of first constant current and then constant voltage, which not only increases the charging rate but also can further increase the charging capacity of the battery 120.

It may be understood that the specific details of the charging apparatus 110 controlling the temperature of the battery 120 may refer to the aforementioned description of the BMS 122 controlling the temperature of the battery 120. The corresponding temperature control logic is similar, but the hardware control is implemented by the charging apparatus 110. For the sake of brevity, the details will not be repeated herein.

The present application further provides a charging method for a battery 120, which is performed by a charging apparatus 110. The specific details of the charging method may refer to the aforementioned description of the charging method 200. The corresponding temperature control logic is similar, but the methods, steps, processes, and the like performed by the BMS 122 are replaced by those performed by the charging apparatus 110.

The transmission of the information or instructions between the charging apparatus 110 and the heating apparatus 130, as well as between the charging apparatus 110 and the control unit in the electric device may be transferred indirectly through the BMS 122. Moreover, if feasible, the charging apparatus 110 may also perform information or instruction transmission directly with the heating apparatus 130 or a control module in the electric device, such as a VCU, without going through the BMS 122.

Specifically, the charging method includes controlling the temperature of the battery 120 in response to a charging instruction, so that the temperature of the battery 120 remains within a preset temperature range during at least part of stages of a charging process.

The temperature range includes, for example, at least one of the following ranges: 30 °C to 60 °C, 30 °C to 55 °C, 30 °C to 50 °C, 30 °C to 45 °C, 30 °C to 40 °C, 40 °C to 50 °C, and 40 °C to 45 °C.

In some embodiments, controlling the temperature of the battery 120 includes: acquiring the information of the positive electrode active material of the battery 120; and controlling the temperature of the battery 120 in the case that the positive electrode active material includes LiMPO₄, where M includes Mn element and Fe element.

In some embodiments, controlling the temperature of the battery 120 includes: receiving the state parameter of the battery 120 sent by the BMS 122 of the battery 120; and controlling the temperature of the battery 120 according to the state parameter.

In some embodiments, the state parameter includes the temperature of the battery 120; and controlling the temperature of the battery 120 according to the state parameter includes: sending a heating instruction to the BMS 122 in the case that the temperature of the battery 120 is less than or equal to a first temperature threshold, where the heating instruction is defined to instruct the BMS 122 to control the heating apparatus 130 to heat the battery 120.

In some embodiments, the charging method further includes: sending a stop-heating instruction to the BMS 122 in the case that the battery 120 is heated to a temperature greater than or equal to a second temperature threshold, where the second temperature threshold is greater than or equal to the first temperature threshold, and the stop-heating instruction is defined to instruct the BMS 122 to control the heating apparatus 130 to stop heating the battery 120.

In some embodiments, the state parameter further includes the SOC of the battery 120; and sending the heating instruction to the heating apparatus 130 in the case that the temperature of the battery 120 is less than or equal to the first temperature threshold includes: sending the heating instruction to the BMS 122 in the case that the temperature of the battery 120 is less than or equal to the first temperature threshold and the SOC of the battery 120 is greater than or equal to a first SOC threshold.

In some embodiments, the charging method further includes: sending the stop-heating instruction to the BMS 122 in the case that the battery 120 is heated to a temperature greater than or equal to the second temperature threshold, and/or the SOC of the battery 120 is less than or equal to a second SOC threshold.

In some embodiments, the first SOC threshold and/or the second SOC threshold is determined based on the molar ratio of the iron element in the iron-manganese element of the positive electrode active material. For example, the first SOC threshold and/or the second SOC threshold is the product of the SOC of the battery 120 in a fully charged state and the molar ratio.

The present application further provides a BMS configured to perform the charging method 200 for the battery 120 described in any one of the above embodiments, the positive electrode active material of the battery 120 including LiMPO₄, where M includes Mn element and Fe element.

The present application further provides an electric device, including the battery 120 described in any one of the above embodiments, where the battery 120 is configured to provide power for the electric device.

The electric device may be, for example, a mobile phone, a portable device, a laptop, a battery car, an electric toy, an electric tool, an electric vehicle, a ship, and a spacecraft. For example, the spacecraft includes an airplane, a rocket, a space shuttle, and a spaceship.

As an example, FIG. 10 is a structural diagram of a vehicle 1 according to an embodiment of the present application. The vehicle 1 may be a fuel vehicle, a gas vehicle, or a new energy vehicle. The new energy vehicle may be a pure electric vehicle, a hybrid vehicle, or an extended-range vehicle. A motor 30, a controller 20, and a battery 120 may be arranged inside the vehicle 1. The controller 20 is configured to control the battery 120 to power the motor 30. For example, the battery 120 may be arranged at the bottom, front, or rear of the vehicle 1. The battery 120 may be configured to power the vehicle 1. For example, the battery 120 may serve as the operation power source for the vehicle 1 and is used for the circuit system of the vehicle 1, for example, for operation power needed for starting, navigating, and driving of the vehicle 1. In another embodiment of the present application, the battery 120 may not only serve as an operation power source for the vehicle 1, but also serve as a driving power source for the vehicle 1 to, instead of or in part instead of fuel or natural gas, provide driving power for the vehicle 1.

The present application further provides a charging device, including a processor and a memory; the memory is configured to store a computer program, and the processor is configured to call and run the computer program stored in the memory to perform the method performed by the BMS 122 or the charging apparatus 110 in any one of the above embodiments.

The present application further provides a computer-readable storage medium for storing a computer program. The computer program, when executed by a computing device, causes the computing device to implement the method performed by the BMS 122 or the charging apparatus 110 in any one of the above embodiments. Optionally, the computer program may be a computer program in the BMS 122 or the charging apparatus 110 described above.

It is to be noted that the various embodiments and/or the technical features of the embodiments described in the present application may be arbitrarily combined without conflict, and the combined technical solutions also fall within the protection scope of the present application.

In the various embodiments of the present application, the numerical order of the above processes does not imply the sequence of execution. The execution order of these processes should be determined by their functions and internal logic, and should not impose any limitation on the implementation of the embodiments of the present application.

Those of ordinary skill in the art will recognize that the units and algorithm steps of various examples described in conjunction with the embodiments disclosed herein can be implemented in electronic hardware, or a combination of computer software and electronic hardware. Whether these functions are performed in hardware or software depends on the particular application and design constraints of the technical solutions. Those skilled in the art may implement the described functions in varying ways for each particular application, but such implementation should not be interpreted as departing from the scope of the present application.

In the several embodiments provided in the present application, it should be understood that the disclosed systems, apparatuses, and methods may be implemented in other ways. For example, the above-described apparatus embodiments are merely illustrative. For example, the division of the units is only a logical functional division, and in actual implementation, there may be other division methods. For example, a plurality of units or components may be combined or integrated into another system, or some features may be omitted or not executed. In addition, the coupling, direct coupling, or communication connection between each other that is shown or discussed may be indirect coupling or communication connection through some interfaces, apparatuses, or units, and it may be in electrical, mechanical, or other forms.

The units described as separate parts may or may not be physically separate, and parts displayed as units may or may not be physical units, that is, they may be located in one place or distributed across a plurality of network units. Some or all of the units may be selected according to actual needs to achieve the purpose of the solutions of the embodiments.

The various embodiments described in this specification may be implemented individually or in combination, which is not limited in the embodiments of the present application.

Although the present application has been described with reference to preferred embodiments, various modifications can be made and components can be replaced with equivalents without departing from the scope of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A battery, comprising:
at least one battery cell, a positive electrode active material of the battery cell comprising LiMPO₄, wherein M comprises Mn element and Fe element; and
a battery management system, configured to control a temperature of the battery in response to a charging instruction, so that the temperature of the battery remains within a preset temperature range during at least part of stages of a charging process.

2. The battery according to claim 1, wherein the battery management system is specifically configured to:
acquire a state parameter of the battery; and
control the temperature of the battery according to the state parameter.

3. The battery according to claim 2, wherein the state parameter comprises the temperature of the battery, and the battery management system is specifically configured to:
send, in a case that the temperature of the battery is less than or equal to a first temperature threshold, a heating instruction to a heating apparatus, the heating instruction being defined to instruct the heating apparatus to heat the battery.

4. The battery according to claim 3, wherein the battery management system is further configured to:
send, in a case that the battery is heated to a temperature greater than or equal to a second temperature threshold, a stop-heating instruction to the heating apparatus, the second temperature threshold being greater than or equal to the first temperature threshold, and the stop-heating instruction being defined to instruct the heating apparatus to stop heating the battery.

5. The battery according to claim 3 or 4, wherein the state parameter further comprises a state of charge (SOC) of the battery, and the battery management system is specifically configured to:
send, in a case that the temperature of the battery is less than or equal to the first temperature threshold, and the SOC of the battery is greater than or equal to a first SOC threshold, the heating instruction to the heating apparatus.

6. The battery according to claim 5, wherein the battery management system is further configured to:
send, in a case that the battery is heated to a temperature greater than or equal to the second temperature threshold, and/or the SOC of the battery is less than or equal to a second SOC threshold, the stop-heating instruction to the heating apparatus.

7. The battery according to claim 5 or 6, wherein the first SOC threshold and/or the second SOC threshold is determined based on a molar ratio of the iron element in an iron-manganese element of the positive electrode active material.

8. The battery according to claim 7, wherein the first SOC threshold and/or the second SOC threshold is a product of the SOC of the battery in a fully charged state and the molar ratio.

9. The battery according to any one of claims 3 to 8, wherein the battery management system is specifically configured to:
send, before the charging process, the heating instruction to the heating apparatus, and control, in a case that the heating apparatus heats the battery to a temperature within the temperature range, the battery to enter the charging process; or
send, during the charging process, the heating instruction to the heating apparatus, the heating apparatus being configured to heat the battery in parallel during the charging process; or
send, during the charging process, the heating instruction to the heating apparatus, and control a duration for which the charging process is paused for heating, the heating apparatus being configured to heat the battery within the duration.

10. The battery according to any one of claims 3 to 9, wherein the heating apparatus is electrically connected to the battery, and the heating apparatus is configured to provide a pulse current to the battery in response to the heating instruction, so that the battery generates heat when the pulse current passes through the battery.

11. The battery according to claim 10, wherein the heating apparatus comprises a charging apparatus for charging the battery, wherein the charging apparatus is configured to charge the battery based on the pulse current in response to the heating instruction.

12. The battery according to claim 10, wherein the heating apparatus comprises a motor in an electric device containing the battery, the motor comprises a winding and a control circuit connected between the winding and the battery, and the battery management system is specifically configured to:
send the heating instruction to a vehicle control unit in the electric device, the vehicle control unit being configured to control the control circuit in response to the heating instruction, so that the motor charges the battery based on the pulse current.

13. The battery according to claim 10, wherein the heating apparatus comprises a heating circuit, the heating circuit comprises an energy storage element and a switch module, and the switch module is configured to form a circuit where the energy storage element charges the battery and a circuit where the battery discharges to the energy storage element in response to the heating instruction, so that the energy storage element charges the battery based on the pulse current.

14. The battery according to any one of claims 3 to 9, wherein the battery comprises the heating apparatus, the heating apparatus is arranged outside a housing of the battery, and the heating apparatus is configured to generate heat in response to the heating instruction to heat the battery through heat transfer between the heating apparatus and the battery.

15. The battery according to claim 14, wherein the heating apparatus comprises a heating film, the heating film comprises a conductive layer and an insulating layer located between the conductive layer and the housing, the conductive layer is configured to generate heat during passage of a current and transfer the heat to the battery, and the insulating layer is configured to electrically isolate the conductive layer from the battery.

16. The battery according to claim 14, wherein the heating apparatus comprises a heat-generating component and a heat-conducting component, the heat-conducting component accommodates a heat-conducting medium therein, the heat-generating component is configured to generate heat during passage of a current, and the heat-conducting medium in the heat-conducting component is configured to transfer the heat generated by the heat-generating component to the battery.

17. The battery according to claim 14, wherein the heating apparatus comprises a hydrothermal pipeline arranged around the battery, the hydrothermal pipeline is connected to a heat pump, and the heat pump is configured to control circulating inflow and outflow of a liquid in the hydrothermal pipeline, thereby heating the battery through the liquid in the process.

18. The battery according to any one of claims 3 to 17, wherein the battery management system is further configured to:
determine a heating method for heating the battery according to the temperature of the battery; and
send the heating instruction to a corresponding heating apparatus according to the heating method.

19. The battery according to claim 18, wherein the battery management system is specifically configured to:
determine, in a case that the temperature of the battery is less than a third temperature threshold, the heating method to be a first heating method, the first heating method being a method for heating the battery based on the pulse current; and
determine, in a case that the temperature of the battery is greater than the third temperature threshold, the heating method to be a second heating method, the second heating method being a method for heating the battery through heat transfer.

20. The battery according to any one of claims 3 to 19, wherein the battery management system is further configured to:
determine a heating method for heating the battery according to heating rates of the battery under different heating methods; and
send the heating instruction to a corresponding heating apparatus according to the heating method.

21. The battery according to claim 20, wherein the battery management system is specifically configured to:
determine the heating method for the battery is a heating method corresponding to a higher heating rate between the first heating method and the second heating method, the first heating method being the method for heating the battery based on the pulse current, and the second heating method being the method for heating the battery through the heat transfer.

22. The battery according to any one of claims 1 to 21, wherein the battery management system is further configured to:
send a charging parameter to the charging apparatus, wherein the charging parameter comprises information of a constant current and a constant voltage, so that the charging apparatus charges the battery based on the constant current, and charges, in a case that the battery is charged to a voltage greater than or equal to a voltage threshold based on the constant current, the battery based on the constant voltage until the battery reaches the fully charged state.

23. The battery according to any one of claims 1 to 22, wherein the temperature range comprises at least one of the following ranges:
30 °C to 60 °C, 30 °C to 55 °C, 30 °C to 50 °C, 30 °C to 45 °C, 30 °C to 40 °C, 40 °C to 50 °C, and 40 °C to 45 °C.

24. The battery according to any one of claims 1 to 23, wherein the positive electrode active material comprises at least one of the following materials:
LiMn_{1-y}Fe_{y}PO₄, wherein y is any value in a range of 0.001 to 0.5;
Li₁₊ₜMn_{1-c}Fe_{c}P_{1-z}R_{z}O₄, wherein t is any value in a range of -0.100 to 0.100, c is any value in a range of 0.001 to 0.500, z is any value in a range of 0.001 to 0.100, and R comprises one or more elements selected from B, S, Si, and N; and
Li_{1+w}CₘMn₁₋ᵤFeᵤP₁₋ₐRₐO₄₋ₙDₙ, wherein C comprises one or more elements selected from Zn, Al, Na, K, Mg, Nb, Mo, and W, R comprises one or more elements selected from B, S, Si, and N, D comprises one or more elements selected from S, F, Cl, and Br, w is any value in a range of -0.100 to 0.100, u is any value in a range of 0.001 to 0.500, a is any value in a range of 0.001 to 0.100, n is any value in a range of 0.001 to 0.1, and m is any value in a range of 0.9 to 1.1.

25. A charging apparatus, comprising:
a charging module, configured to charge a battery; and
a control module, configured to control a temperature of the battery in response to a charging instruction, so that the temperature of the battery remains within a preset temperature range during at least part of stages of a charging process.

26. The charging apparatus according to claim 25, wherein the control module is specifically configured to:
acquire information of a positive electrode active material of the battery; and
control the temperature of the battery in a case that the positive electrode active material comprises LiMPO₄, wherein M comprises Mn element and Fe element.

27. The charging apparatus according to claim 25 or 26, wherein the charging apparatus further comprises a transceiver module configured to receive the charging instruction.

28. The charging apparatus according to claim 27, wherein the control module is specifically configured to determine whether the charging apparatus is reserved or occupied; and
the transceiver module is further configured to send a charging rejection instruction in a case that the control module determines that the charging apparatus is reserved or occupied, the charging rejection instruction being defined to instruct that the charging apparatus is reserved or occupied.

29. The charging apparatus according to claim 28, wherein the transceiver module is further configured to send a charging permission instruction in a case that the control module determines that the charging apparatus is not reserved or occupied, the charging permission instruction being defined to instruct that the charging apparatus is not reserved or occupied; and
receive a charging reservation instruction, the charging reservation instruction being defined to request a reservation for the charging apparatus.

30. The charging apparatus according to any one of claims 26 to 29, wherein the control module is specifically configured to:
receive a state parameter of the battery sent by a battery management system of the battery; and
control the temperature of the battery according to the state parameter.

31. The charging apparatus according to claim 30, wherein the state parameter comprises the temperature of the battery, and the control module is specifically configured to:
send, in a case that the temperature of the battery is less than or equal to a first temperature threshold, a heating instruction to the battery management system, the heating instruction being defined to instruct the battery management system to control a heating apparatus to heat the battery.

32. The charging apparatus according to claim 31, wherein the control module is further configured to:
send, in a case that the battery is heated to a temperature greater than or equal to a second temperature threshold, a stop-heating instruction to the battery management system, the second temperature threshold being greater than or equal to the first temperature threshold, and the stop-heating instruction being defined to instruct the battery management system to control the heating apparatus to stop heating the battery.

33. The charging apparatus according to claim 31 or 32, wherein the state parameter further comprises a state of charge (SOC) of the battery, and the control module is specifically configured to:
send, in a case that the temperature of the battery is less than or equal to the first temperature threshold, and the SOC of the battery is greater than or equal to a first SOC threshold, the heating instruction to the battery management system.

34. The charging apparatus according to claim 33, wherein the control module is specifically configured to:
send, in a case that the battery is heated to a temperature greater than or equal to the second temperature threshold, and/or the SOC of the battery is less than or equal to a second SOC threshold, the stop-heating instruction to the battery management system.

35. The charging apparatus according to claim 33 or 34, wherein the first SOC threshold and/or the second SOC threshold is determined based on a molar ratio of the iron element in an iron-manganese element of the positive electrode active material.

36. The charging apparatus according to claim 35, wherein the first SOC threshold and/or the second SOC threshold is a product of the SOC of the battery in a fully charged state and the molar ratio.

37. The charging apparatus according to any one of claims 31 to 36, wherein the control module is further configured to:
determine a heating method for heating the battery according to the temperature of the battery; and
send, according to the heating method, the heating instruction to the battery management system of the battery, the heating instruction being defined to control a corresponding heating apparatus to heat the battery.

38. The charging apparatus according to claim 37, wherein the control module is specifically configured to:
determine, in a case that the temperature of the battery is less than a third temperature threshold, the heating method to be a first heating method, the first heating method being a method for heating the battery based on a pulse current; and
determine, in a case that the temperature of the battery is greater than the third temperature threshold, the heating method to be a second heating method, the second heating method being a method for heating the battery through heat transfer.

39. The charging apparatus according to any one of claims 31 to 38, wherein the battery management system is further configured to:
determine a heating method for heating the battery according to heating rates of the battery under different heating methods; and
send the heating instruction to a corresponding heating apparatus according to the heating method.

40. The charging apparatus according to claim 39, wherein the battery management system is specifically configured to:
determine the heating method for the battery is a heating method corresponding to a higher heating rate between the first heating method and the second heating method, the first heating method being the method for heating the battery based on the pulse current, and the second heating method being the method for heating the battery through the heat transfer.

41. The charging apparatus according to any one of claims 25 to 40, wherein the temperature range comprises at least one of the following ranges:
30 °C to 60 °C, 30 °C to 55 °C, 30 °C to 50 °C, 30 °C to 45 °C, 30 °C to 40 °C, 40 °C to 50 °C, and 40 °C to 45 °C.

42. A charging method for a battery, wherein a positive electrode active material of the battery comprises LiMPO₄, wherein M comprises Mn element and Fe element, and the charging method comprises:
controlling a temperature of the battery in response to a charging instruction, so that the temperature of the battery remains within a preset temperature range during at least part of stages of a charging process.

43. The charging method according to claim 42, wherein controlling the temperature of the battery comprises:
acquiring a state parameter of the battery; and
controlling the temperature of the battery according to the state parameter.

44. The charging method according to claim 43, wherein the state parameter comprises the temperature of the battery, and controlling the temperature of the battery according to the state parameter comprises:
sending, in a case that the temperature of the battery is less than or equal to a first temperature threshold, a heating instruction to a heating apparatus, the heating instruction being defined to instruct the heating apparatus to heat the battery.

45. The charging method according to claim 44, wherein the state parameter further comprises a state of charge (SOC) of the battery, and sending, in the case that the temperature of the battery is less than or equal to the first temperature threshold, the heating instruction to the heating apparatus comprises:
sending, in a case that the temperature of the battery is less than or equal to the first temperature threshold, and the SOC of the battery is greater than or equal to a first SOC threshold, the heating instruction to the heating apparatus.

46. The charging method according to claim 45, wherein the first SOC threshold and/or a second SOC threshold is determined based on a molar ratio of the iron element in an iron-manganese element of the positive electrode active material.

47. The charging method according to claim 46, wherein the first SOC threshold and/or the second SOC threshold is a product of the SOC of the battery in a fully charged state and the molar ratio.

48. The charging method according to any one of claims 42 to 47, wherein the temperature range comprises at least one of the following ranges:
30 °C to 60 °C, 30 °C to 55 °C, 30 °C to 50 °C, 30 °C to 45 °C, 30 °C to 40 °C, 40 °C to 50 °C, and 40 °C to 45 °C.

49. A charging method for a battery, wherein the charging method comprises:
controlling a temperature of the battery in response to a charging instruction, so that the temperature of the battery remains within a preset temperature range during at least part of stages of a charging process.

50. The charging method according to claim 49, wherein controlling the temperature of the battery comprises:
acquiring information of a positive electrode active material of the battery; and
controlling the temperature of the battery in a case that the positive electrode active material comprises LiMPO₄, wherein M comprises Mn element and Fe element.

51. The charging method according to claim 50, wherein controlling the temperature of the battery comprises:
receiving a state parameter of the battery sent by a battery management system of the battery; and
controlling the temperature of the battery according to the state parameter.

52. The charging method according to claim 51, wherein the state parameter comprises the temperature of the battery, and controlling the temperature of the battery according to the state parameter comprises:
sending, in a case that the temperature of the battery is less than or equal to a first temperature threshold, a heating instruction to the battery management system, the heating instruction being defined to instruct the battery management system to control a heating apparatus to heat the battery.

53. The charging method according to claim 52, wherein the state parameter further comprises a state of charge (SOC) of the battery, and sending, in the case that the temperature of the battery is less than or equal to the first temperature threshold, the heating instruction to the heating apparatus comprises:
sending, in a case that the temperature of the battery is less than or equal to the first temperature threshold, and the SOC of the battery is greater than or equal to a first SOC threshold, the heating instruction to the battery management system.

54. The charging method according to claim 53, wherein the first SOC threshold is determined based on a molar ratio of the iron element in an iron-manganese element of the positive electrode active material.

55. The charging method according to claim 54, wherein the first SOC threshold is a product of the SOC of the battery in a fully charged state and the molar ratio.

56. The charging method according to any one of claims 49 to 55, wherein the temperature range comprises at least one of the following ranges:
30 °C to 60 °C, 30 °C to 55 °C, 30 °C to 50 °C, 30 °C to 45 °C, 30 °C to 40 °C, 40 °C to 50 °C, and 40 °C to 45 °C.

57. A battery management system, wherein the battery management system is configured to perform the charging method for the battery according to any one of claims 42 to 48, a positive electrode active material of the battery comprising LiMPO₄, wherein M comprises Mn element and Fe element.

58. An electric device, comprising the battery according to any one of claims 1 to 24.
